# EUROPEAN PATENT APPLICATION

(11) **EP 4 832 561 A1**
(43) Date of publication of application: **28.10.2026**
(21) Application number: 23962306.9
(22) Date of filing: 22.12.2023
(51) Int. Cl.: H04W 24/10

(54) **TERMINAL, WIRELESS COMMUNICATION METHOD, AND BASE STATION**

(71) Applicant: NTT DOCOMO, INC., Tokyo 100-6150 (JP)
(72) Inventor: IKEUCHI, Takashi, Tokyo 100-6150 (JP); OKANO, Mayuko, Tokyo 100-6150 (JP); YOSHIOKA, Shohei, Tokyo 100-6150 (JP); HARADA, Hiroki, Tokyo 100-6150 (JP); KUMAGAI, Shinya, Tokyo 100-6150 (JP); WANG, Jing, Beijing, 100190 (CN); PI, Qiping, Beijing, 100190 (CN); LIU, Wenjia, Beijing, 100190 (CN); HOU, Xiaolin, Beijing, 100190 (CN); CHEN, Lan, Beijing, 100190 (CN)
(74) Representative: Hoffmann Eitle
(86) International application number: PCT/JP2023/046281
(87) International publication number: WO 2025/134390

(57) **Abstract**

A terminal according to an aspect of the present disclosure includes a receiving section that receives a signal for sensing, and a control section that controls transmission of a report of a fault in the sensing in a case where information based on measurement of the signal satisfies a condition.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (NPL 1). Furthermore, for the purpose of further increasing capacity and advancement of LTE (third generation partnership project (3GPP (registered trademark)) release (Rel)8, 9), the specifications of LTE-Advanced (3GPP Rel. 10 to 14) have been drafted.

Successor systems to LTE (for example, also referred to as a 5th generation mobile communication system (5G), a 5G+(plus), a 6th generation mobile communication system (6G), a New Radio(NR), a 3GPP Rel. 15 and subsequent releases) are being studied.

### Citation List

### Non Patent Literature

NPL 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

Radio sensing in future radio communication systems (for example, NR) is being studied.

However, details of radio sensing have not been sufficiently studied. When details of radio sensing are not clear, sensing quality/communication quality may deteriorate.

Therefore, an object of the present disclosure is to provide a terminal, a radio communication method, and a base station that improve performance of radio sensing.

### Solution to Problem

A terminal according to an aspect of the present disclosure includes a receiving section that receives a signal for sensing, and a control section that controls transmission of a report of a fault in the sensing in a case where information based on measurement of the signal satisfies a condition.

### Advantageous Effects of Invention

According to an aspect of the present disclosure, performance of radio sensing can be improved.

### Brief Description of Drawings

[FIG. 1] FIGS. 1A and 1B illustrate an example of a scenario of monostatic sensing in a BS or a UE.
[FIG. 2] FIGS. 2A and 2B illustrate an example of a scenario of bistatic sensing between BSs or UEs.
[FIG. 3] FIGS. 3A and 3B illustrate an example of a scenario of bistatic sensing between a BS and a UE.
[FIG. 4] FIG. 4 illustrates an example of an NR positioning architecture.
[FIG. 5] FIG. 5 illustrates an example of a sequence of a location service.
[FIG. 6] FIG. 6 shows an example of version support for a plurality of positioning methods.
[FIG. 7] FIG. 7 illustrates an example of an inter-gNB handover procedure in NR.
[FIG. 8] FIG. 8 illustrates a first part of an example of an AMF/UPF handover procedure in NR.
[FIG. 9] FIG. 9 illustrates a second part of an example of an AMF/UPF handover procedure in NR.
[FIG. 10] FIG. 10 illustrates an example of association between Options 1 and 2 in Embodiment A0.
[FIG. 11] FIG. 11 illustrates an example of a sensing architecture according to Embodiment A1.
[FIG. 12] FIG. 12 illustrates a first example of the procedure of the extended NRPPa.
[FIG. 13] FIG. 13 illustrates a second example of the procedure of the extended NRPPa.
[FIG. 14] FIG. 14 illustrates a third example of the procedure of the extended NRPPa.
[FIG. 15] FIG. 15 illustrates a fourth example of the procedure of the extended NRPPa.
[FIG. 16] FIG. 16 illustrates an example of an IE for the extended NRPPa.
[FIG. 17] FIG. 17 illustrates a first example of the procedure of the extended LPP.
[FIG. 18] FIG. 18 illustrates a second example of the procedure of the extended LPP.
[FIG. 19] FIG. 19 illustrates a third example of the procedure of the extended LPP.
[FIG. 20] FIG. 20 illustrates a first example of an IE for the extended LPP.
[FIG. 21] FIG. 21 illustrates a second example of the IE for the extended LPP.
[FIG. 22] FIG. 22 illustrates a third example of the IE for the extended LPP.
[FIG. 23] FIG. 23 illustrates an example of a sensing architecture according to a combination of Embodiment A1 and Embodiment A2.
[FIG. 24] FIG. 24 illustrates an example of a sensing architecture according to Embodiment A3.
[FIG. 25] FIG. 25 illustrates an example of a sensing architecture according to a combination of Embodiment A1 and Embodiment A3.
[FIG. 26] FIG. 26 is a flowchart illustrating an example of Option 1-3-1 in Embodiment B1.
[FIG. 27] FIG. 27 is a flowchart illustrating an example of Option 1-3-2 in Embodiment B1.
[FIG. 28] FIG. 28 is a flowchart illustrating an example of Option 1-3-3 in Embodiment B1.
[FIG. 29] FIG. 29 illustrates an example of a mobility procedure according to Embodiment C2a.
[FIG. 30] FIG. 30 illustrates an example of a mobility procedure according to a variation of Embodiment C2a.
[FIG. 31] FIG. 31 illustrates an example of a mobility procedure according to Embodiment C2b.
[FIG. 32] FIG. 32 illustrates an example of a mobility procedure according to Embodiment C2c.
[FIG. 33] FIG. 33 illustrates an example of a mobility procedure according to Embodiment C2d.
[FIG. 34] FIG. 34 is a diagram illustrating an example of a configuration of an NW node (network node) according to one embodiment.
[FIG. 35] FIG. 35 is a diagram illustrating an example of a schematic configuration of a radio communication system according to one embodiment.
[FIG. 36] FIG. 36 is a diagram illustrating an example of a configuration of a base station according to one embodiment.
[FIG. 37] FIG. 37 is a diagram illustrating an example of a configuration of a user terminal according to one embodiment.
[FIG. 38] FIG. 38 is a diagram illustrating an example of a hardware configuration of the base station and the user terminal according to one embodiment.
[FIG. 39] FIG. 39 is a diagram illustrating an example of a vehicle according to one embodiment.

### Description of Embodiments

### (ISAC)

The motivation for integrated sensing and communications (ISAC) is to realize high sensing performance and new/enhanced services by using different frequencies and cellular NW devices, and to optimize NW parameters by analyzing real-time sensing data. Use cases and potential requirements for expansion of the 5G system to provide sensing services to address a plurality of different target industries/applications and the fact that some use cases may include non-3GPP type (non-radio communication type) sensors (for example, radar and camera) are being studied.

For example, the use case 1 is sensing for sightseeing spot traffic management. For example, the use case 2 is an intruder detection in a smart home environment.

As the ISAC, sensing-assisted communication and communication-assisted sensing are being studied. As sensing-assisted communication, sensing-assisted beam management and sensing-assisted resource allocation are being studied. As communication-assisted sensing, network sensing and coordinated sensing are being studied. In order to realize them, waveforms, beamforming, artificial intelligence (AI)/deep learning (DL) operation radio access technology (RAT), a frame structure, and a reference signal are being studied. In addition, as a shared spectrum, hardware, and algorithm for the ISAC, a higher frequency band, a larger antenna array, and a similar signal processing algorithm for communication and sensing are being studied.

The ISAC has a problem with integrated signal waveform (unified waveform) that simultaneously satisfies requests for communication (for example, the OFDM signal) and sensing (for example, the chirp signal), ISAC beamforming that simultaneously realizes communication by beamforming (for example, a transmitted signal and a received signal), sensing (for example, an echo signal, a transmitted signal, and a reflected signal), and interference suppression therebetween, and CSI mining (CSI mining by AI) in which sensing information is mined from channel information of communication (for example, the UL transmitted signal) and radar (radar, for example, a DL radar signal) by an AI/DL network.

Three types of radar and communication systems are being studied based on whether the communication and radar (sensing) systems share hardware/band. The three types are an independent radar and communication system (independent system), a joint radar and communication system (joint system), and an integrated radar and communication system (integrated system). Hereinafter, an ISAC system in which hardware and a band are shared between radar and communication systems is targeted.

### (Radio sensing)

Radio sensing based on communication radio waves is an important means to enable a perspective of the 6G cyber physical systems (CPS). The ISAC may be implemented by 5G-advanced (A) and 6G with a development of the higher frequency and the wider bandwidth. The ISAC waveform and sensing reference signal (RS) design is a key technology for implementing radio sensing.

As use cases of ISAC, there are metaverse, high altitude platform station (HAPS) sensing, crowd estimation, and the like. The HAPS may be a flight vehicle having an altitude of about 20 km, and may be used for a non-terrestrial network (NTN).

The HAPS sensing realizes ultra-remote distance sensing using an echo signal based on support of a communication function. Considering that the sensing distance depends on the intensity of the echo signal, the sensing waveform or the sensing sequence of an extremely low peak-to-average power ratio (PAPR) is required in order to improve the SNR of the echo signal under a given transmission power.

### (Sensing mode/method)

Conventional communication systems include communication between one BS (base station, gNB) and one UE, and joint transmission between a plurality of BSs and one UE. Conventional radar systems include a monostatic radar in which one radar transmits a radar signal and the radar receives an echo from a sensing object, and a bistatic radar/multistatic radar in which one radar transmits a radar signal and one or more radars receive an echo from a sensing object.

The independent system uses separate hardware and separate frequency bands for radar and communication. The separate hardware may be installed at the same position or may be installed at separate locations.

A joint system uses the same hardware and separate frequency bands for radar and communication.

The unified system uses the same hardware and the same frequency band for radar and communication.

Sensing in an ISAC system can be implemented by any of the following sensing methods.
◊Monostatic sensing: Monostatic sensing using the idea of a monostatic radar. This sensing method requires one BS or one UE, and performs sensing by an echo signal. In this sensing method, there is no co-ordination between BSs, co-ordination between UEs, or co-ordination between a BS and a UE. A use case of this sensing method is, for example, imaging using terahertz.
◊Bistatic sensing/multistatic sensing: bistatic sensing/multistatic sensing with bistatic radar/multistatic radar. This sensing method requires two or more BSs or two or more UEs, and performs sensing by a reflected signal. A use case of this sensing method is, for example, positioning.
◇UE-assisted sensing: Sensing assisted by UE(UE-assisted sensing, sensing aided by UE) using the idea of NR positioning. This sensing method requires a BS and a UE, and performs sensing by a communication (UL/DL) signal. In this sensing method, the existing 5G NR framework operates. In this sensing method, UE is required, and both the sensing of line-of-sight (LOS) and non-line-of-sight (NLOS) require high computational complexity. A use case of this sensing method is, for example, breath monitoring.

### [Monostatic sensing]

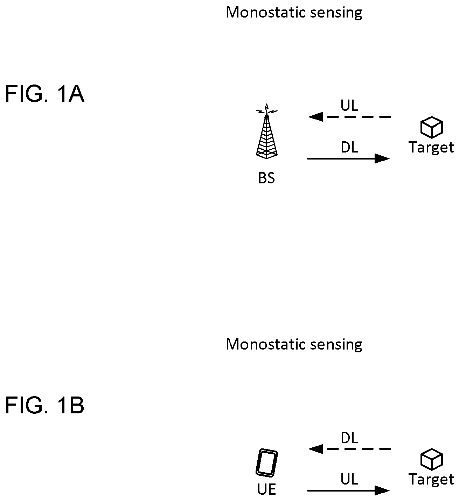

The sensing method includes sensing methods of BS (gNB) monostatic sensing (FIG. 1A) and UE monostatic sensing (FIG. 1B).

A scenario suitable for monostatic sensing has the following features.
◇The sensing target is in the vicinity of the sensing BS/UE and a high or medium SNR of the echo signal is required.
◇The target may not have a communication capability.

The capability requirements for monostatic sensing have the following features.
◇High capability is required due to full duplex at the BS or UE.

The performance of monostatic sensing has the following features.
◇By not using quantization, the accuracy is improved.
◇The accuracy is related to the SNR of the echo signal.
◇The latency is short.

### [Bistatic sensing/multistatic sensing]

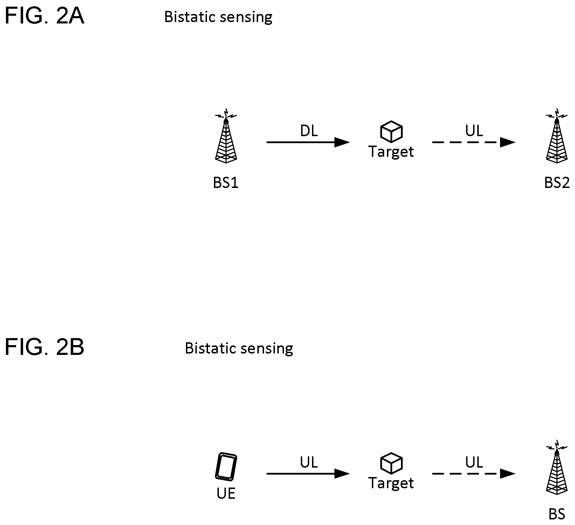

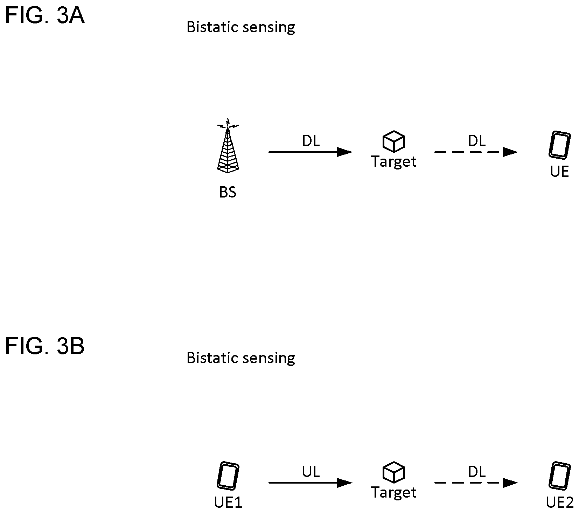

The sensing method includes sensing methods of bistatic sensing from BS to BS (gNB-gNB, BS-BS, BS1-BS2, gNB-to-gNB, gNB1-to-gNB2) (FIG. 2A), bistatic sensing from UE to BS (UE-gNB, UE-BS, UE-to-gNB) (FIG. 2B), bistatic sensing from BS to UE (gNB-UE, BS-UE, gNB-to-UE) (FIG. 3A), and bistatic sensing from UE to UE (UE-UE, UE1-UE2, UE-to-UE, UE1-to-UE2) (FIG. 3B).

A scenario suitable for BS-BS bistatic sensing has the following features.
◇There is a need for tight synchronization and coordination between BSs, and there is a need for scheduling coordination between a plurality of BSs.
◇The target may not have a communication capability.

The capability requirements for BS-BS bistatic sensing have the following features.
◇Because of half duplex, implementation is possible even with low capability.
◇High capability is required for synchronization between BSs.

The performance of BS-BS bistatic sensing has the following features.
◇By not using quantization, the accuracy is improved.
◇The accuracy is related to the SNR of the echo signal.
◇The latency is moderate.

A scenario suitable for UE-BS bistatic sensing, BS-UE bistatic sensing, and UE-UE bistatic sensing has the following features.
◇It is required that there is a communication UE around the target.

The capability requirements for UE-BS bistatic sensing have the following features.
◇Because of half duplex, implementation is possible even with low capability.
◇High UE positioning accuracy is required.

The capability requirements for BS-UE bistatic sensing and UE-UE bistatic sensing have the following features.
◇Because of half duplex, implementation is possible even with low capability.
◇The UE needs sufficient calculation resources and high accuracy of detecting the reflected signal.
◇High UE positioning accuracy is required.

The performance of the UE-BS bistatic sensing, the BS-UE bistatic sensing, and the UE-UE bistatic sensing has the following features.
◇Quantization of the feedback value results in medium accuracy.
◇The accuracy is related to the deployed resource and the UE location.
◇The latency is long.

In each embodiment described below, the following scenarios and assumptions may be used.
◇In the ISAC scenario, communication and sensing functions are required.
◇For low complexity and backward compatibility, TDD (half duplex) may be assumed in the BS and UE instead of full duplex.

In a TDD-based ISAC system, sensing signals and reflection/echo signals are preferably transmitted and received on different time resources. For example, in BS-based sensing including monostatic BS sensing and bistatic BS1 to BS2 sensing, the sensing signal is preferably transmitted during DL time resources and the reflection/echo signal is preferably received during UL time resources. For example, in UE-based sensing including monostatic UE sensing and bistatic UE1 to UE2 sensing, the sensing signal is preferably transmitted during the UL time resource and the reflection/echo signal is preferably received during the DL time resource. In sensing from the bistatic BS to the UE, it is preferable to use the DL time resource for the sensing. In sensing from the bistatic UE to the DL, it is preferable to use the UL time resource for the sensing.

### (Location service: 5G System (5GS) Location Services (LCS)/Architecture Model and Concepts/Functional description of LCS per network function)

In the present disclosure, the following abbreviations may be used.
- 5G Core Network: 5GC, 5GCN
- 5G System: 5GS
- (Radio) Access Network: (R)AN
- Next Generation-Radio Access Network: NG-RAN
- Access and Mobility Management Function: AMF
- Location Management Function: LMF
- Non-3GPP InterWorking Function: N3IWF
- Mobile Originated Location Request: MO-LR
- Mobile Terminated Location Request: MT-LR
- Network Induced Location Request: NI-LR
- Gateway Mobile Location Center: GMLC
- Network Exposure Function: NEF
- Public Land Mobile Network: PLMN
- Trusted Non-3GPP Access Network: TNAN
- Internet Protocol: IP
- IP Multimedia Subsystem: IMS
- Unified Data Management: UDM
- Unified Data Repository: UDR
- Quality of Service: QoS

The 5G system architecture includes the following service-based interfaces:
◇Namf: A service-based interface presented by the AMF.
◇Nnef: A service-based interface presented by the NEF.

The 5GS LCS architecture includes the following service-based interfaces for location (position identified) services:
◇Nlmf: A service-based interface presented by the LMF.
◇Ngmlc: A service-based interface presented by the GMLC.

The 5G system architecture includes the following reference points:
◇N1: Reference point between the UE and the AMF.
◇N2: Reference point between the (R)AN and the AMF.

The NG-RAN node is a gNB or an ng-eNB. The gNB is a node that provides protocol terminations of the NR user plane and control plane for the UE and is connected to the 5GC via the NG interface. The ng-eNB is a node that provides protocol terminations of the E-UTRA user plane and control plane for the UE and is connected to the 5GC via the NG interface.

The gNB may provide measurement information for the target UE and convey this information to the LMF. To support NR RAT-dependent positioning, the gNB may perform measurement of a radio signal for the target UE and provide a measurement result for position estimation.

The ng-eNB may provide a measurement result for position estimation, provide measurement information for the target UE, and convey the measurement value to the LMF. The ng-eNB performs its measurements in response to the (on-demand or periodic) request from the LMF. The ng-eNB may provide a plurality of TPs. The ng-eNB may broadcast the assistance data information received from the LMF in the positioning system information message.

The UE may perform measurements of DL signals from the NG-RAN and other sources, such as E-UTRAN, different GNSS and TBS systems, WLAN access points, Bluetooth (registered trademark) beacons, sensors for UE pressure and motion. The measurement performed is determined by the selected positioning method. The UE may, for example, include an independent positioning function (for example, global positioning systems (GPS)), so that the UE can report its location independently from the NG-RAN transmission. The UE having an independent positioning function may utilize assistance information obtained from a network.

Access and mobility management functions (AMFs) include the responsible function for managing the positioning of the target UE for all types of location requests. The AMF is accessible to the GMLC and NEF via the Namf interface, to the RAN via the N2 reference point, and to the UE via the N1 reference point. Functions performed by the AMF to support a location service include the following:
◇The AMF initiates a NI-LR location request for a UE making an IMS emergency call or for knowing a UE geographic area for making an NE satellite access for PLMN selection verification.
◇The AMF receives and manages location requests for periodic location events, triggered location events, and location events available to the UE, from the GMLC for 5GC-MT-LR and delayed 5GC-MT-LR.
◇The AMF receives and manages location requests for 5GC-MO-LR from the UE.
◇The AMF receives and manages an event publishing request for location information from the NEF.
◇The AMF selects the LMF.
◇The AMF receives the updated privacy requirement from the UE and transfers it to the UDR via the UDM.
◇The AMF supports cancellation of periodic or triggered location reporting for the target UE.
◇The AMF supports, for the target UE, changing the serving LMF to periodic or triggered location reporting.
◇In a case where the assistance (support) data is being broadcast by the 5GS using the encrypted form, the AMF receives the encryption key from the LMF and transfers it to the properly subscribed UE using the mobility management procedure.
◇The AMF saves the UE positioning capability received from the LMF and transmits the UE positioning capability to the LMF along with the received location request.

The location management function (LMF) manages the support of different location services for a target UE, including the positioning of the UE and the delivery of assistance data to the UE. The LMF may interact with the serving gNB or the serving eNB to obtain the position measurement values for the UE, including the UL measurement value acquired by the NG-RAN and the DL measurement value acquired by the UE, the measurement value being provided to the NG-RAN as part of other functions such as handover.

The LMF manages full standby coordination and scheduling of resources required for the location of UEs registering in or accessing the 5GCN. The LMF may calculate or confirm estimation values of the final location and any velocity to estimate the accuracy achieved. The LMF receives the location request for the target UE from the serving AMF using the Nlmf interface. The LMF interacts with the UE to exchange location information applied to the UE assisted and UE based positioning methods, and interacts with the NG-RAN, the N3IWF, or the TNAN to obtain the location information.

To support location services, additional functions that may be performed by the LMF include the following:
◇The LMF supports, for the target UE, requests for a single location received from the serving AMF.
◇The LMF supports, for the target UE, requests received from the serving AMF for periodic or triggered locations.
◇The LMF determines a type, a quantity, and a procedure of the positioning method based on the UE, the PLMN capability, the QoS, the UE connectivity state for each access type, the LCS client type, the co-ordination type, optionally, the service type, and the indication of requiring the trusted UE location information.
◇The LMF reports the UE location estimation value directly to the GMLC for the periodic or triggered location of the target UE.
◇The LMF supports periodic or triggered location cancellation for the target UE.
◇The LMF supports the provision of broadcast assistance data using an encrypted or unencrypted form via the NG-RAN and the transfer of the encryption key to the approved UE via the AMF.
◇The LMF supports changing the serving LMF for periodic or triggered location reporting for the target UE.
◇The LMF supports the reception of a stored UE positioning capability from the AMF and supports the provision of an updated UE positioning capability to the AMF.
◇The LMF maps the UE location to a geographic area where the PLMN is permitted to operate based on requests from the AMF or a geographic area where the PLMN is not permitted to operate based on requests from the AMF.
◇The LMF supports the determination of the UE location at the scheduled location time.
◇The LMF determines whether to use a user plane or a control plane for positioning.
◇The LMF supports handling of 5GC-MT-LR, 5GC-NI-LR, 5GC-MO-LR, and delayed 5GC-MT-LR for the periodic or triggered location over the user plane connection between the UE and the LMF.

### (NR Positioning Architecture: Stage 2 functional specification of UE positioning in NG-RAN/NG-RAN UE Positioning Architecture)

In the present disclosure, the following abbreviations may be used.

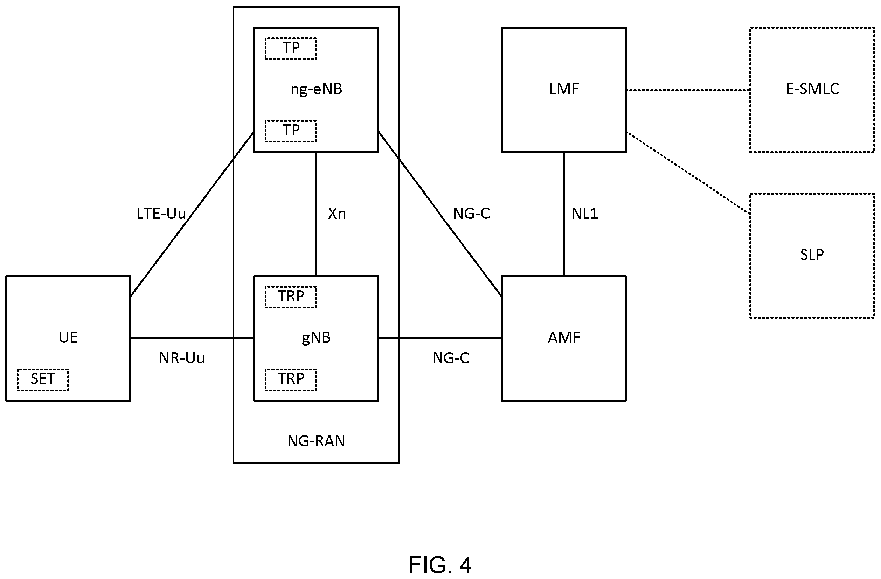

FIG. 4 illustrates an example of an architecture (NR positioning architecture) in the 5GS applicable to positioning of the UE using the NR or the E-UTRA access. As in this example, for a split gNB architecture, the gNB-DU may include a TRP function, and the TRP function may support a function for a TP, an RP, or both the TP and the RP. The gNB-DU including the TRP function does not need to provide a cell service. The NG-RAN includes the ng-eNB and the gNB.

The AMF receives, from another entity (for example, the GLMC or the UE), a request for some location service associated with a given target UE, or the AMF itself determines the initiation of some location service on behalf of the given target UE (for example, in response to an IMS emergency call from the UE). The AMF then transmits a location service request to the LMF. The LMF processes a location service request that may include at least one of transferring of assistance data to the target UE and positioning of the target UE in order to assist in the UE-based/UE-assisted positioning. The LMF then returns the result of the location service (for example, a position estimation value for the UE) to the AMF.

The NR-Uu interface (radio interface between the UE and the UTRA) that connects the UE to the gNB using radio is used as one of several transport links for the NR positioning protocol for the target UE using NR access to the NG-RAN.

The LTE-Uu interface (radio interface) connecting the UE to the ng-eNB using radio is used as one of several transport links for the LTE positioning protocol for the target UE using LTE access to the NG-RAN.

The NG-C interface between the gNB and the AMF and between the ng-eNB and the AMF is transparent to all UE position-related procedures (unrecognized). The NG-C interface is involved in the procedure only as a transport link for the NR positioning protocol.

The NL1 interface between the LMF and AMF is transparent to all of the UEs, gNBs and ng-eNBs involved in the positioning procedure. The NL1 interface is used only as a transport link for the LPP and the NRPPa.

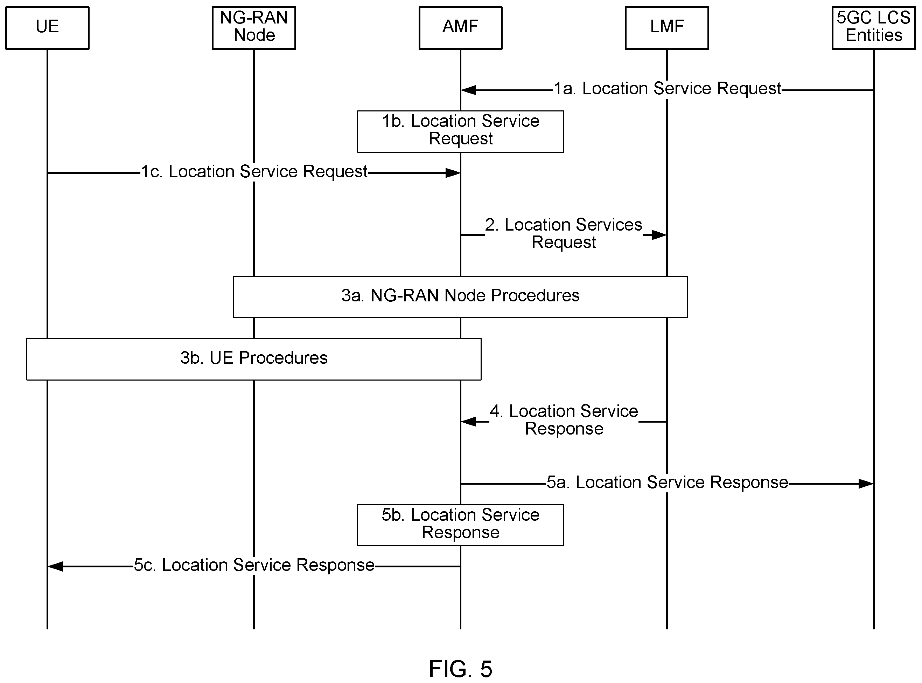

As shown in FIG. 5, an overall sequence of events that is in the location service and that is applied to the UE, the NG-RAN, and the LMF follows the following several steps.
◇1a. Any entity (for example, GMLC) in the 5GC requests some location service (for example, positioning) for the target UE from the serving AMF.
◇1b. Alternatively, the serving AMF for the target UE determines that some location service is required (for example, for identifying a location of the UE in response to an emergency call).
◇1c. Alternatively, the UE requests some location service from the serving AMF at the NAS level.
◇2. The AMF transfers the location service request to the LMF.
◇3a. The LMF initiates a location procedure using the serving ng-eNB or gNB in the NG-RAN, and possibly the adjacent ng-eNB or gNB in the NG-RAN (for example, in order to obtain the position measurement value or assistance data).
◇3b. In addition to or instead of step 3a, the LMF initiates a location procedure with the UE (for example, to obtain a position estimation value or a position measurement value, or to transfer the assistance data to the UE).
◇4. The LMF provides the location service response to the AMF and includes any necessary results (for example, the results may include an indication of success or failure, and a location estimation value of the UE in a case where the results are requested and acquired).
◇5a. In a case where step 1a has been performed, the AMF returns a location service response to the 5GC entity in step 1a and includes any necessary results (for example, a location estimation value of the UE).
◇5b. In a case where step 1b is performed, the AMF uses the location service response received in step 4 to assist the service that triggered it in step 1b (for example, a location estimation value associated with an emergency call may be provided to the GMLC).
◇5c. In a case where step 1c is performed, the AMF returns a location service response to the UE and includes any required results (for example, a location estimation value of the UE).

### (NR positioning protocol: Stage 2 functional specification of UE positioning in NG-RAN/Signalling protocols and interfaces)

In the present disclosure, the following abbreviations may be used.
◇Enhanced Cell-ID (positioning method): E-CID
◇Observed Time Difference Of Arrival: OTDOA
◇Multi-Round Trip Time: Multi-RTT
◇Uplink Angle of Arrival: UL-AoA
◇Azimuth-Angle of Arrival: A-AoA
◇Zenith-Angle of Arrival: Z-AoA
◇Uplink Time Difference of Arrival: UL-TDOA
◇Downlink Time Difference of Arrival: DL-TDOA
◇Downlink Angle-of-Departure: DL-AoD
◇wireless local area network: WLAN
◇terrestrial beacon system: TBS
◇Metropolitan Beacon System: MBS
◇Positioning Reference Signal: PRS
◇UserPlane Location Protocol: ULP

The NR Positioning Protocol A (NR Positioning Protocol A, NRPPa) conveys information between the NG-RAN node and the LMF. It is used to support the following positioning functions:
◇The E-CID for the E-UTRA where the measurement value is transferred from the ng-eNB to the LMF.
◇Data collection from the ng-eNB or the gNB for support of the OTDOA for the E-UTRA.
◇Acquisition of a cell ID and a cell portion ID from the gNB to support NR cell ID positioning method.
◇Exchange of information between the LMF and the NG-RAN node for the purpose of assistance data broadcasting.
◇The NR E-CID where the measurement value is transferred from the gNB to the LMF.
◇The NR multi-RTT where the measurement value is transferred from the gNB to the LMF.
◇The NR UL-AoA where the measurement value is transferred from the gNB to the LMF.
◇The NR UL-TDOA where the measurement value is transferred from the gNB to the LMF.
◇Data collection from the gNBs for support of the DL-TDOA, the DL-AoD, the multi-RTT, the UL-TDOA, and the UL-AoA.
◇Measurement pre-configuration information transfer allowing the LMF to request the NG-RAN node to preset and activate/deactivate measurement gap/PRS processing window.

The LTE positioning protocol (LPP) is terminated between the target device (UE in control plane case or SET in user plane case) and the positioning server (LMF in control plane case or SLP in user plane case).

The LPP protocol is intended to allow positioning of the NR and the LTE using a plurality of different positioning methods while separating the details of any given positioning method and its underlying transport details from each other.

The LPP procedure involves request/response pairing of a plurality of messages or one or more "unaccepted" messages. Each procedure has a single purpose (for example, transfer of assistance data, exchange of LPP-related capabilities, or positioning of the target device according to some QoS and one or more positioning method specifications). To achieve more complex purposes (for example, the positioning of the target device with respect to the transfer of the assistance data and the exchange of LPP related capabilities), a plurality of procedures can be used in series/parallel. The plurality of procedures further allows more than one positioning to be attempted at the same time (for example, to acquire a coarse location estimation value using low latency and acquire a more accurate location estimation value using a high delay).

### (Standard UE positioning method: Stage 2 functional specification of UE positioning in NG-RAN/Main concepts and requirements/Standard UE Positioning Methods)

A standard UE positioning method supported for NG-RAN access is the following method:
◇NW-assisted GNSS method
◇OTDOA positioning based on LTE signals
◇Extended cell ID method based on LTE signals (E-CID)
◇WLAN Positioning
◇Bluetooth positioning
◇TBS positioning
◇Sensor-based positioning:
   - ◇Barometric pressure sensor
   - ◇Motion sensor
◇NR extended cell ID method based on an NR signal (NR E-CID)
◇multi RTT based on an NR signal
◇DL-AoD based on an NR signal
◇DL-TDOA based on an NR signal
◇UL-TDOA based on an NR signal
◇UL-AoA including A-AoA and Z-AoA based on an NR signal

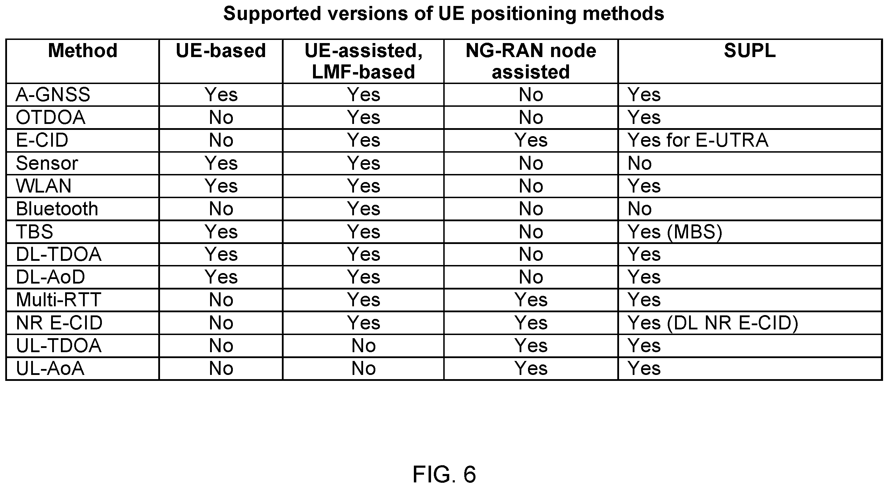

The OTDOA includes PRS-based TBS positioning. In the existing specification, only OTDOA based on an LTE signal is supported. In a case where the UE is served (service is provided) by the gNB, the E-CID includes the cell ID for the NR method. The E-CID is an extended cell ID based on an LTE signal. In an existing specification, only TBS positioning based on an MBS signal is supported. The SUPL in FIG. 6 indicates whether the positioning method is supported by the SUPL ULP.

Hybrid positioning using a plurality of methods from a list of a plurality of positioning methods is supported. Standalone (that is, autonomous without network assistance) modes using one or more methods from the list of a plurality of positioning methods are also supported.

The plurality of positioning methods may be supported for at least one of a UE-based version, a UE-assisted/LMF-based version, and an NG-RAN node-assisted version. FIG. 6 shows for the plurality of positioning method whether its version is supported in the specification.

### (Handover: NR and NG-RAN Overall

### Description/Mobility and State Transitions/Intra-NR/Mobility in RRC_CONNECTED)

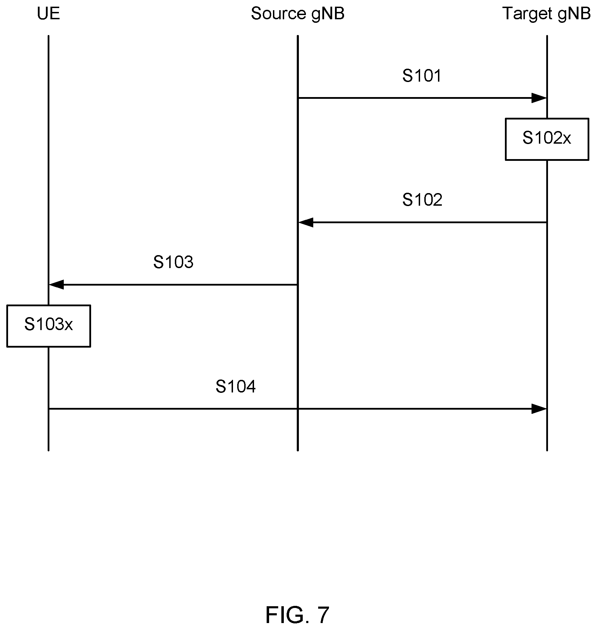

As shown in FIG. 7, an inter-gNB handover procedure includes the following several operations.
◇1: The source gNB initiates a handover and issues a HANDOVER REQUEST on an Xn interface.
◇2: The target gNB performs admission control, and provides a new RRC configuration as part of HANDOVER REQUEST ACKNOWLEDGE.
◇1: The source gNB provides the RRC configuration to the UE by transferring the RRCReconfiguration message received in the HANDOVER REQUEST ACKNOWLEDGE. The RRCReconfiguration message includes at least a cell ID and all information required for accessing the target cell so that the UE can access the target cell without reading system information. Optionally, information required for contention-based and contention-free random access may be included in the RRCReconfiguration message. The access information to the target cell may include beam specific information, if any.
◇S101: The source gNB initiates a handover and issues the HANDOVER REQUEST via an Xn interface.
◇S102x, S102: The target gNB performs admission control and provides a new RRC configuration as part of a HANDOVER REQUEST ACKNOWLEDGE.
◇S103, S103x: The source gNB provides the RRC configuration to the UE by transferring the RRCReconfiguration message received in the HANDOVER REQUEST ACKNOWLEDGE. The RRCReconfiguration message includes at least a cell ID and all information required for accessing the target cell so that the UE can access the target cell without reading system information. In some cases, the information required for contention-based and contention-free random access may be included in the RRCReconfiguration message. The access information to the target cell may include beam specific information, if any.
◇S104: The UE moves the RRC connection to the target gNB, and returns RRCReconfigurationComplete.

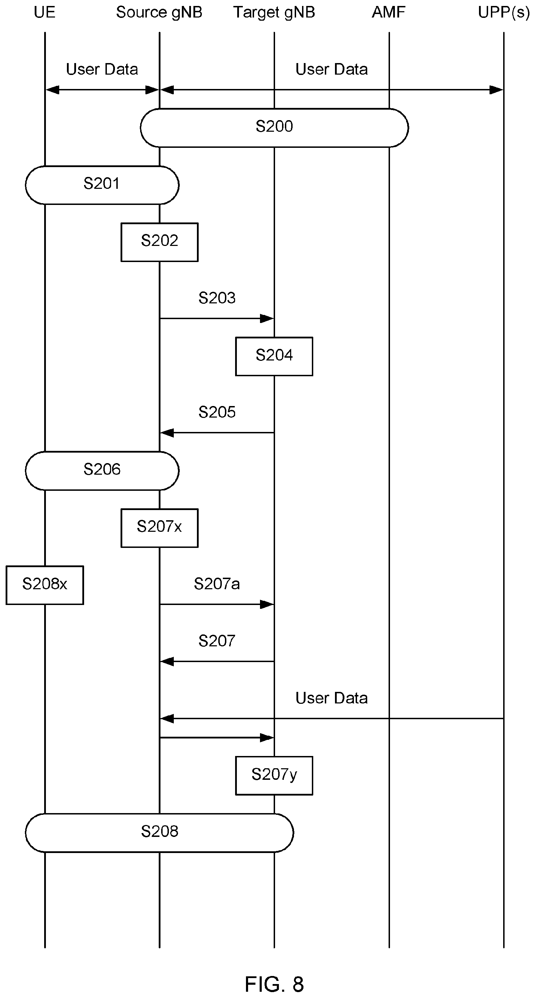

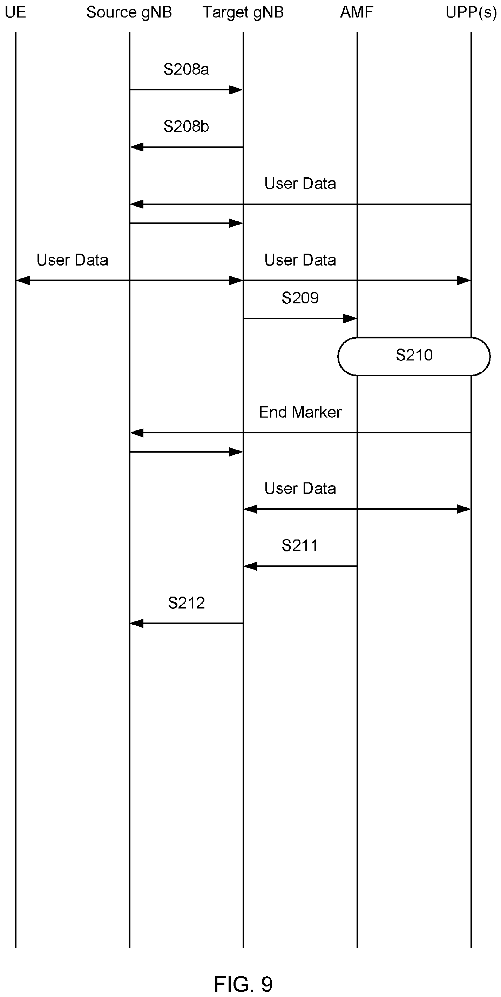

As shown in FIGS. 8 and 9, the intra-AMF/UPF handover procedure includes the following several operations.
◇S200: The UE context in the source gNB includes information about roaming and access restrictions provided at the time of connection establishment or last TA update.
◇S201: The source gNB configures a measurement procedure of the UE, and the UE makes a report according to the measurement configuration.
◇S202: The source gNB determines the handover of the UE based on the MeasurementReport and the RRM information.
◇S203: The source gNB delivers a transparent RRC container including information necessary for preparing a handover at the target side, and issues the handover request message to the target gNB. The information includes at least a target cell ID, a K_{gNB}*, a C-RNTI of the UE in the source gNB, an RRM configuration including an inactive time of the UE, a basic AS configuration including antenna information and a DL carrier frequency, a current QoS flow for a DRB mapping rule provided to the UE, SIB1 information from the source gNB, a UE capability for different RATs, and PDU session related information, and includes UE report measurement information in a case where the UE report measurement information including beam related information is available. The PDU session related information includes slice information and a QoS flow level QoS profile. The source gNB may request a DAPS handover to one or more DRBs. The K_{gNB}* is a key distributed by the ME and the gNB in a case where horizontal or vertical key distribution is performed.
◇S204: Entry control may be performed by the target gNB. In a case where the slice information is transmitted to the target gNB, entry control in consideration of the slice is executed. In a case where a PDU session relates to an unsupported slice, the target gNB rejects such a PDU session.
◇S205: The target gNB prepares a handover in L1/L2, and transmits the HANDOVER REQUEST ACKNOWLEDGE to the source gNB. The HANDOVER REQUEST ACKNOWLEDGE includes a transparent container transmitted to the UE as an RRC message for performing handover. The target gNB indicates whether to receive a DAPS handover.
◇S206: The source gNB triggers the Uu handover by transmitting an RRCReconfiguration message including information (at least a target cell ID, a new C-RNTI, and a security algorithm identifier of the target gNB for the selected security algorithm) required for accessing the target cell to the UE. Also, a set of individual RACH resources, an association of RACH resources and SSBs, an association of RACH resources and UE-specific CSI-RS configurations, a shared RACH resource, system information of a target cell, and the like can be included.
◇S207x: The source gNB delivers buffered data and new data from one or more UPFs.
◇S207a, S207: For a DRB where the DAPS is not configured, the source gNB transmits an EARLY STATUS TRANSFER message to the target gNB, to convey the uplink PDCP SN reception status and the downlink PDCH SN transmission status of the DRB (that is, RLC AM) on which PDCP status retention is applied. The uplink PDCP SN reception status includes at least the PDCP SB of the initially missing UL PDCP SDU, and may include a bitmap of its reception status in a case where there is an out-of-sequence UL PDCP SDU that the UE is required to retransmit in the target cell. The downlink PDCP SN transmission status indicates a next PDCP SB to which the target gNB has assigned a new PDCP SN and that has no PDCP SN yet.
◇S207y: The target gNB buffers the user data from the source gNB.
◇S208x: The UE is out of an old cell and synchronizes with a new cell.
◇S208: The UE synchronizes with the target cell, and transmits an RRCReconfigurationComplete message to the target gNB to complete an RRC handover procedure.

For a DAPS handover, in a case of receiving the RRCReconfiguration message, the UE does not disconnect the message from the source cell. Upon receiving explicit release from the target node, the UE releases the source resources and configuration and stops receiving/transmitting DL/UL with the source.
◇S208a, S208b: In a case of DAPS handover, the target gNB transmits, to the source gNB, a HANDOVER SUCCESS message to make a notification that the UE successfully accesses the target cell. As a reply, the source gNB transmits the SN STATUS TRANSFER message to the plurality of DRBs for which the DAPS to which the description of S207 is applied is configured, and the normal data transfer is subsequently performed.
◇S209: The target gNB transmits a PATH SWITCH REQUEST message to the AMF, switches a DL data path for the target gNB, and triggers the 5GC to establish an NG-C interface instance for the target gNB.
◇S210: The 5GC switches the DL data path for the target gNB. For each PDU session/tunnel, the UPF transmits one or more "end marker" packets to the old path to the source gNB, and then releases any U plane/TNL resources for the source gNB.
◇S211: The AMF checks the PATH SWITCH REQUEST message using the PATH SWITCH REQUEST ACKNOWLEDGE.
◇S212: When receiving the PATH SWITCH REQUEST ACKNOWLEDGE message from the AMF, the target gNB transmits UE CONTEXT RELEASE to notify the source gNB of the success of the handover. After that, the ongoing data transfer, in which the source gNB releases resources associated with the UE context and related to the radio and C-plane, may continue.

### (Issue)

For different cases, a mobility procedure is conceivable.

In order to detect and follow an object, in a plurality of different modes/methods of sensing, a point (BS/UE) related to sensing may be changed with a movement of the object or the UE to be measured, and the mode/method of sensing may be changed in consideration of deterioration in sensing performance. The point may be a point at which the sensing RS is transmitted or a point at which the sensing result is measured/reported.

In the monitoring environment, as the environment changes or the UE moves, points related to sensing may be changed, and the sensing mode/method may be changed in consideration of deterioration in sensing performance.

In the motion monitoring, a point related to sensing may be changed as a person moves or a UE moves, and a sensing mode/method may be changed in consideration of deterioration in sensing performance.

These procedures may be referred to as mobility procedures for sensing, as in the mobility procedures for communication. The mobility procedure may include at least one change of the BS, the UE, and the sensing method/mode.

Due to different/individual key performance indicators (KPIs) and procedures for sensing, the coverage of sensing may be different from that for communication. The timing/condition to trigger sensing mobility may be different from that for communication. The sensing KPI may include at least one of coverage of an area or a range of the sensing service, resolution (distance/speed), latency, a refresh rate, a probability of non-detection or detection, a reliability level, and false detection.

A mobility procedure for such sensing has not been sufficiently studied. When such a study is not sufficient, sensing performance may deteriorate.

Therefore, the present inventors have conceived a mobility procedure for sensing. Specifically, mobility procedures for a plurality of different sensing modes are being studied, and a BS involved in the sensing mode is considered. Although the following embodiments mainly describe a mobility procedure for use cases of object detection and tracking, the embodiments can be applied to other use cases.

Therefore, the present inventors have studied a mobility procedure in sensing.

### (Various Interpretations and the like)

Hereinafter, embodiments according to the present disclosure will be described in detail with reference to the drawings. It is noted that each of the following embodiments (for example, each case) may be used independently, or may be applied by combining at least two of the embodiments.

In the present disclosure, "A/B" and "at least one of A and B" may be read interchangeably with each other. Furthermore, in the present disclosure, "A/B/C" may mean "at least one of A, B, and C".

In the present disclosure, notify, activate, deactivate, instruct (or indicate), select, configure, update, determine, and the like may be read interchangeably with each other. In the present disclosure, support, control, can control, operate, can operate, and the like may be read interchangeably with each other.

In the present disclosure, Radio Resource Control (RRC), an RRC parameter, an RRC message, a higher layer parameter, a field, an information element (IE), configuration, and the like may be read interchangeably with each other. In the present disclosure, a Medium Access Control control element (MAC control element (CE)), an update command, an activation/deactivation command, and the like may be read interchangeably with each other.

In the present disclosure, the higher layer signaling may be, for example, any one of Radio Resource Control (RRC) signaling, Medium Access Control (MAC) signaling, broadcast information, other messages (a message from the core network, such as, for example, a positioning protocol (for example, NR Positioning Protocol A (NRPPa)/LTE Positioning Protocol (LPP)) message), or the like, or a combination thereof.

In the present disclosure, the MAC signaling may use, for example, the MAC control element (MAC CE), a MAC protocol data unit (PDU), or the like. The broadcast information may be, for example, a master information block (MIB), a system information block (SIB), remaining minimum system information (RMSI), other system information (OSI), or the like.

In the present disclosure, the physical layer signaling may be, for example, downlink control information (DCI), uplink control information (UCI), or the like.

In the present disclosure, "has the capability of..." may be read interchangeably with "supports/reports the capability of...".

In the present disclosure, ceil(x) and a ceiling function may be read interchangeably with each other. In the present disclosure, floor(x) and a floor function may be read interchangeably with each other. In the present disclosure, sqrt(x) and square root may be read interchangeably with each other. In the present disclosure, x mod y, mod(x,y), a mod function, and a modulo operation may be read interchangeably with each other. In the present disclosure, Σ_{i=M}^{M+N-1}f(i), Σ_{i=M}^{M+N-1}fᵢ, a summation of f(i) or fᵢ over i= M, M+1,..., M+N-1, f(M)+f(M+1)+...+f(M+N-1), and f_{M}+f_{M+1}+...+f_{M+N-1} may be read interchangeably with each other. C(n,k) may be read interchangeably with the number of combinations for selecting k values from n values (combinatorial coefficient), the binomial coefficients, ₙCₖ, and Cₙ^{k}.

In the present disclosure, a_{b}, a_b, and a notation in which b is attached to a at the lower right may be read interchangeably with each other. In the present disclosure, a^{c}, a^c, and a notation in which c is attached to a at the upper right may be read interchangeably with each other. In the present disclosure, a_{b}^{c}, a_b^c, and a notation in which b is attached to a at the lower right and c is attached to a at the upper right may be read interchangeably with each other. In the present disclosure, x̃ may be expressed by attaching ~ over x, or may be referred to as x tilde. In the present disclosure, x⁻ may be expressed by attaching - over x, or may be referred to as x bar.

In the present disclosure, the frequency range corresponding to FR1 may be 410 to 7125 MHz. In the present disclosure, FR2 may include FR2-1 and FR2-2, the frequency range corresponding to FR2-1 may be 24250 to 52600 MHz, and the frequency range corresponding to FR2-1 may be 52600 to 71000 MHz.

The following terms/abbreviations may be used in the present disclosure.
◇Secure User Plane Location: SUPL
◇SUPL Location Platform: SLP
◇sensing function: SF
◇LTE Positioning Protocol: LPP
◇NR Positioning Protocol A: NRPPa
◇terrestrial network: TN
◇non-terrestrial network: NTN
◇Distribution Unit: DU
◇Transmission/Reception Point: TRP
◇Transmission Point: TP
◇Reception Point: RP
◇Enhanced Serving Mobile Location Centre: E-SMLC
◇SUPL Enabled Terminal: SET
◇Non-Access Stratum: NAS
◇mobile equipment: ME
◇double active protocol stack: DAPS
◇data radio bearer: DRB
◇user plane function: UPF
◇Control plane interface between NG-RAN and 5GC: NG-C

The Xn interface is open. The Xn interface supports exchange of signaling information between two NG-RAN nodes and transfer of the PDUs to respective tunnel endpoints. Xn is a point-to-point interface between two NG-RAN nodes from a logical point of view. Even in a case where there is no physical direct connection between the two NG-RAN nodes, the point-to-point logical interface is feasible.

The F1 interface is open. The F1 interface supports exchange of signaling information between a plurality of endpoints, and further supports data transmission to each endpoint. F1 is a point-to-point interface between two endpoints from a logical perspective. Even in a case where there is no physical direct connection between the two endpoints, a point-to-point logical interface is feasible. The F1 interface supports separation of the control plane and the user plane. The F1 interface separates a radio network layer and a transport network layer. The F1 interface enables an effect of information associated with the UE and information not associated with the UE. The F1 interface is designed for the future to meet various new requirements and support new services and new functions. One gNB-CU and one set of a plurality of gNB-DUs are visible to other logical nodes as gNBs or en-gNBs. The gNB terminates the Xn interface and the NG interface. The en-gNB terminates the X2 interface and the S1-U interface. The gNB-CU may be separated into a control plane (CP) and a user plane (UP).

In the present disclosure, sensing, radio sensing, and measurement may be read interchangeably with each other.

In the present disclosure, a location (position identified), positioning, a position, a position measurement, a position estimation, a measurement value, an estimation value, a measurement result, sensing, sensing information, a measurement quantity, measurement content, and a measurement type may be read interchangeably with each other.

In the present disclosure, a spatial transmission filter, a spatial reception filter, a spatial domain transmission filter, a spatial domain reception filter, a spatial domain filter, a spatial filter, and a beam may be read interchangeably with each other.

In the present disclosure, configuring/instructing and transmitting the configuration/instruction may be read interchangeably with each other. In the present disclosure, a transmission and a report may be read interchangeably with each other.

In the present disclosure, RS/data used for sensing and a sensing resource may be read interchangeably with each other.

In the present disclosure, an object, a sensing object, a subject, a target, a non-UE target, a UE target, and a sensing subject may be read interchangeably with each other. In the present disclosure, the sensing object may or may not have communication capability. In the present disclosure, the sensing object may include a UE. In the present disclosure, a UE target, a target having the communication capability, a target device, and a UE may be read interchangeably with each other. In the present disclosure, a non-UE target and a target having no communication capability may be read interchangeably with each other.

In the present disclosure, a first signal, a communication signal, an RS, a radar signal, a hybrid signal of communication and radar, an integrated signal, an ISAC signal, a sensing signal, and a signal transmitted by the transmitter may be read interchangeably with each other. In the present disclosure, a second signal, an echo signal, a signal impacted by the object, a signal reflected by the object, a signal refracted by the object, a signal diffracted by the object, a signal transmitted and received by the sensing transceiver, and a signal received by the receiver may be read interchangeably with each other.

In the present disclosure, a UE, an ME, a base station (BS), a station, a node, an NW node (network node), a sensing station, a sensing transmission station, a sensing reception station, a sensing node, a sensing entity, a sensing device, a radio communication device, an IAB, a repeater, a reconfigurable intelligent surface (RIS), a transmitter, a receiver, a transceiver, and an object (target) may be read interchangeably with each other. In the present disclosure, a transmission, a Tx, and a transmitter may be read interchangeably with each other. In the present disclosure, a reception, a Rx, and a receiver may be read interchangeably with each other. In the present disclosure, a transmitter, a sensing transmission station, and a transmission node may be read interchangeably with each other. In the present disclosure, a receiver, a sensing reception station, and a reception node may be read interchangeably with each other. In the present disclosure, the transmitter may be a BS/UE/radio communication device/transmitting/receiving section. In the present disclosure, the receiver may be a BS/UE/radio communication device/transmitting/receiving section. In the present disclosure, the transmitter and the receiver may be one BS/UE/radio communication device/transceiver/transmitting/receiving section. In the present disclosure, a transmitter and a receiver at the same position, a transceiver, an integrated transceiver, a BS, a UE, and a sensing station may be read interchangeably with each other.

In the present disclosure, a base station (BS), an NG-RAN node, a gNB, an ng-eNB, an NG-RAN, a RAN, a network (NW), a TRP, a TP, and an RP may be read interchangeably with each other.

In the present disclosure, an NW node (network node), a server, a sensing server, a positioning server, a 5GC, a core network, an LMF, an AMF, an SMF, an extended LMF, a new SMF, a new AMF, an SF, an SLP, a BS, an NW, a management function, a function, and a node may be read interchangeably with each other.

In the present disclosure, a mobility procedure, mobility, handover, change/switching from the source gNB to one or more target gNBs, and change/switching of the sensing mode may be read interchangeably with each other.

In the present disclosure, a measurement result, a processing result, a processed measurement result, a processing result based on the measurement, a reported measurement result, a result, a value, an amount, an accuracy, and a probability may be read interchangeably with each other.

In the present disclosure, a fault, a failure, performance degradation, and establishment of the condition/event may be read interchangeably with each other.

In the present disclosure, a sensing mode, a sensing method, a sensing type, gNB monostatic sensing, gNB-UE bistatic sensing, UE-gNB bistatic sensing, gNB-gNB bistatic sensing, UE-UE bistatic sensing, and UE monostatic sensing may be read interchangeably with each other.

In the present disclosure, a radio communication method and a sensing method may be read interchangeably with each other.

### (Radio Communication Method)

### <Embodiment A0>

The sensing mode/method may be defined in the specification. The mode/method may be performed according to at least one of the following several Options.

### - Option 1

Similar to the NR positioning mode/method, the sensing mode/method may be categorized and supported in versions of UE-based, UE-assisted, LMF-based, SMF-based, and NG-RAN node-assisted (UE-assisted).

### - Option 2

The sensing mode/method may be classified and supported in terms of at least one of the foregoing sensing method, the foregoing sensing type, and the foregoing sensing scenario.

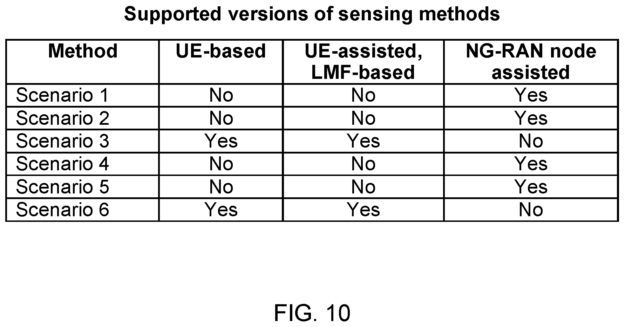

Using a similar definition to NR positioning, the association between Options 1 and 2 may be performed according to FIG. 10.

In each of the following embodiments, the sensing method or the sensing mode may refer to either of Option 1 or Option 2 or a combination of Options 1 and 2.

According to the embodiment, the UE/base station may use a suitable sensing mode/method.

### <Embodiment A1>

The sensing may reuse/divert the NR positioning architecture and protocol, or may be an extension based on the NR positioning architecture and protocol.

### <<Architecture>>

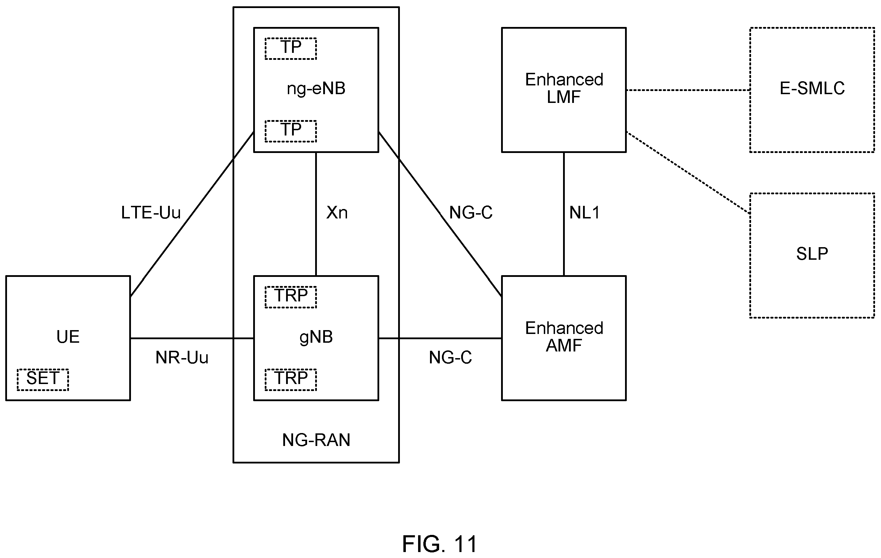

FIG. 11 illustrates an example of the sensing architecture. In this example, an extended AMF is used instead of the AMF in the foregoing NR positioning architecture, and an extended LMF is used instead of the LMF in the foregoing NR positioning architecture.

The AMF is extended for management of sensing requests. The LMF is extended for management of co-ordination and scheduling of resources required for sensing.

Between the NG-RAN node and the LMF, the NRPPa may be extended to support the sensing function. The sensing function may include at least one of the measurement value related to sensing being transferred from the ng-eNB to the LMF, data related to sensing being collected from the gNB, and measurement configuration information being transmitted from the LMF to the NG-RAN node.

Between the UE and the LMF, the LPP may be extended to support a sensing function for sensing mode/method related to UE assistance. Pairing of requests/responses of a plurality of sensing information messages may be defined for a plurality of different sensing methods/modes and transfer of sensing capabilities.

LPP extension may be unnecessary for a sensing method/mode that is not UE related (for example, no UE is required for DL sensing RS measurement and sensing related measurement result feedback, or no UE is required for UL sensing RS transmission).

### <<Extension of NRPPa>>

In the extension of NRPPa, at least one of the following several procedures related to sensing may be introduced.
- Measurement start (for a given sensing method): It allows the LMF to request the NG-RAN node to report the measurement value from the sensing method.
- Measurement failure indication (for a given sensing method): It is a procedure for the NG-RAN node and notifies the LMF that the measurement value for a previously requested sensing method using a measurement start procedure cannot be reported.
- Measurement report (for a given sensing method): It is a procedure for the NG-RAN node and provides the measurement value of sensing methods to the LMF.
- Measurement end (for a given sensing method): It ends the periodic measurement for the sensing method being performed by the NG-RAN node.
- Information exchange (for a given sensing method): It allows the LMF to request the NG-RAN node to transfer information of the sensing method to the LMF.
- Sensing information exchange (for a given sensing method): It is to request sensing information from the NG-RAN node and is initiated by the LMF.
- Sensing information update (for a given sensing method): It is, for example, to indicate to the LMF that a change has occurred in a sensing RS configuration, a use case, a target device, an environment, a sensing area, or a new measurement quantity, and is initiated by the NG-RAN node.
- Sensing activation (for a given sensing method): It is to request the NG-RAN node to activate semi-persistent sensing RS transmission or trigger aperiodic sensing RS transmission, and is initiated by the LMF.
- Sensing deactivation (for a given sensing method): It is to instruct the NG-RAN node that sensing RS transmissions should be deactivated and is initiated by the LMF.
- Sensing RS configuration exchange (for a given sensing method): It is to request the NG-RAN node to configure or update sensing RS transmission (for example, to turn OFF), and is initiated by the LMF.
- Measurement pre-configuration for sensing (for a given sensing method): It is to provide the required information to the serving gNB and request the gNB to pre-configure the sensing-related configuration, and is performed by the LMF.
- Measurement activation for sensing (for a given sensing method): It is to request the NG-RAN node to activate or deactivate the pre-configured sensing measurement-related configuration, and is initiated by the LMF.
- Update/switch of sensing method/mode/type: It updates/activates/deactivates sensing method/mode/use case/target device/environment etc., using potential sensing RS configurations, as in update/activation/deactivation of the measurement report.
- Transfer/control/feedback of assistance information: It exchanges some assistance information for decision regarding the sensing method/RS configuration, and the like.
- Transfer/report/update/abort/failure indication of measurement information (for a given sensing method): It requests one or more TRPs in the NG-RAN node to perform and report the sensing measurement, or it notifies the NG-RAN node of a change in the previously configured measurement, or it aborts the ongoing measurement, or it allows the NG-RAN node to notify the LMF that the previously requested measurement cannot be reported.

Several procedures may reuse/divert the NR positioning procedure, and several procedures may be newly introduced for sensing.

"For a given sensing method" in each procedure may be read as "for a plurality of sensing methods/modes" or "for a given sensing mode" or "for a given use case/sensing area/environment/target device".

In the foregoing several procedures, some new information required in sensing may be exchanged. The new information may be, for example, a sensing area, a measurement area for sensing, a use case, a target device, a channel mode, an environment, or a measurement result to be described later.

An information element (IE) may be defined for at least one of each procedure described above, each measurement result for each sensing method/mode, the sensing RS configuration, the measurement installation, the sensing area or the sensing measurement area, the use case, the target device, the channel model, and the environment. The measurement result may be an RSRP, a time difference, an AoA, an AoD, a delay, a CSI, a channel impulse response, a profile of power/delay/time domain, a measurement timing, a Doppler/velocity, a missing (of the measurement value), a probability of detection/false detection, and the like.

The extension of NRPPa can be applied to any method/mode of sensing in Embodiment A0.

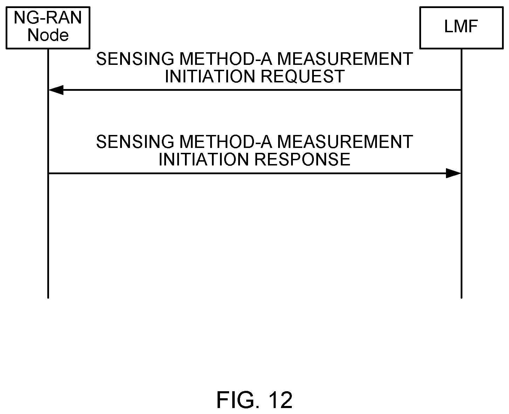

FIG. 12 illustrates a first example of the procedure of the extended NRPPa. This procedure allows the LMF to request the NG-RAN node to report the measurement value from the sensing method A. The LMF transmits a measurement start request of the sensing method A to the NG-RAN node. Thereafter, the NG-RAN node transmits a measurement start response of the sensing method A to the LMF.

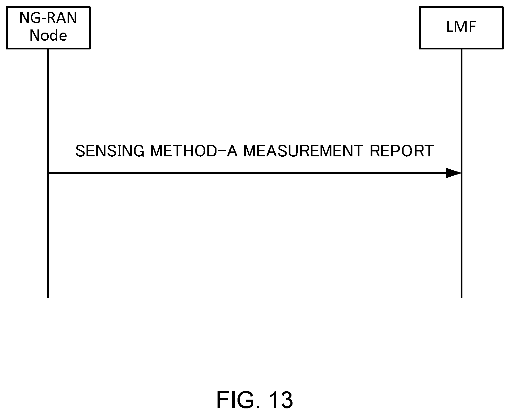

FIG. 13 illustrates a second example of the procedure of the extended NRPPa. In this procedure, the NG-RAN node provides sensing measurements for the UE to the LMF. The NG-RAN node transmits the measurement report of the sensing method A to the LMF.

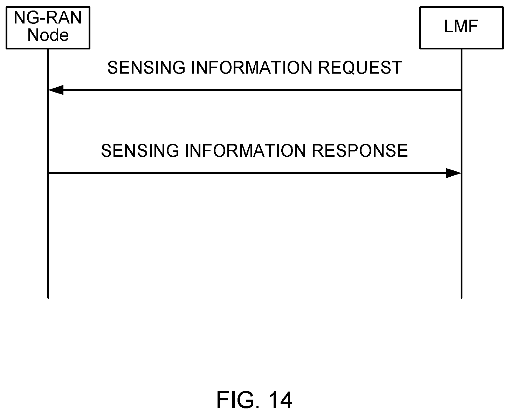

FIG. 14 illustrates a third example of the procedure of the extended NRPPa. This procedure requests positioning information for the UE from the NG-RAN node and is initiated by the LMF. The LMF transmits a sensing information request to the NG-RAN node. Thereafter, the NG-RAN node transmits a sensing information response to the LMF.

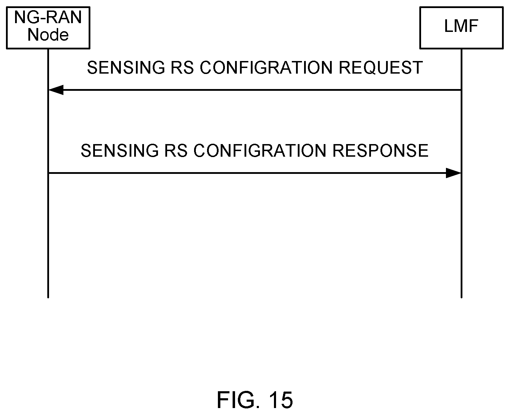

FIG. 15 illustrates a fourth example of the procedure of the extended NRPPa. This procedure requests the NG-RAN node to configure or update sensing RS measurements (for example, to turn OFF) and is initiated by the LMF. The LMF transmits a sensing RS configuration request to the NG-RAN node. The NG-RAN node then transmits a sensing RS configuration response to the LMF.

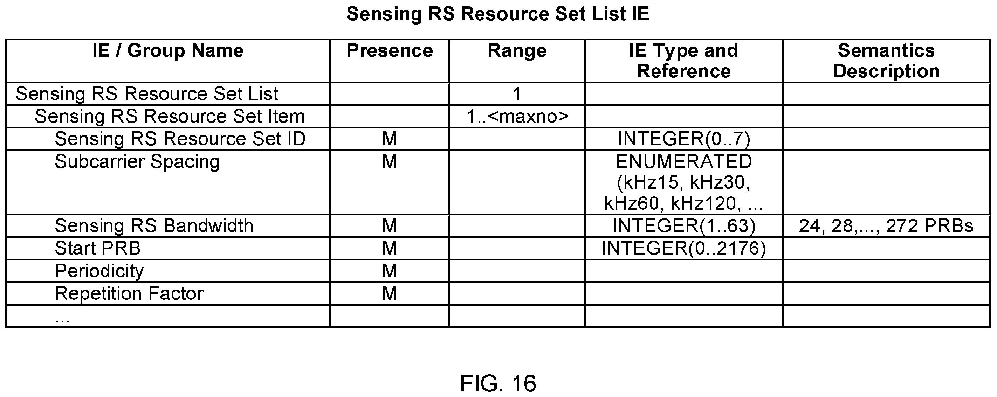

FIG. 16 shows an example of an IE for the extended NRPPa. This example shows the IE/group name, the presence of the IE ("M" when mandatory), the range of the number of IEs (x or from x to y (x..y), <maxno> denotes the maximum number), the type of the IE (type, for example, integer type, enumerated type), the reference destination, and the description of the meaning of the IE. The sensing RS resource set list, which is an IE for sensing RS configuration, includes one or more sensing RS resource set items. Each sensing RS resource set item includes a sensing RS resource set ID, a subcarrier spacing, a sensing RS bandwidth, a start PRB, a period, and a repetition factor.

### <<Extension of LPP>>

In the extension of the LPP, at least one of the following several procedures related to sensing may be introduced.
- Capability transfer procedure (for example, a capability transfer procedure, a capability indication procedure, reception of an LPP request capability, and transmission of an LPP providing capability) for sensing (for a given sensing method): It allows transfer of capabilities from the UE/target to the server.
- Procedure (for example, an assistance data transfer procedure, periodic (P)/semi-persistent (SP)/aperiodic (AP)-assistance data transfer procedure, a P/SP/AP-assistance data transfer procedure using an update procedure, an assistance data delivery procedure, a P/SP/AP-assistance data delivery procedure, transmission of LPP request assistance data, and reception of LPP providing assistance data) related to assistance data transfer (for a given sensing method): It allows the UE/target to request assistance data from a server to assist in sensing and allows the server to transfer the assistance data to the UE/target.
- Procedure (for example, a sensing information transfer procedure, a sensing information delivery procedure, reception of a location information request message, and transmission of a location information providing message) related to sensing information transfer (for a given sensing method): It allows the server to request sensing measurement data/sensing result estimation value from a UE/target, and allows the UE/target to transfer sensing measurement data/sensing result estimation value to the server.
- Error handling procedure: It is an operation method of the reception entity (UE/target or server) operates in a case where the reception entity receives erroneous or unexpected data or detects that no given data is found.
- Abort procedure: It allows the UE/target or the server to abort an ongoing procedure due to some unexpected event. It can be used to stop an ongoing procedure.

Several procedures may reuse/divert the NR positioning procedure, and several procedures may be newly introduced for sensing.

"For a given sensing method" in each procedure may be read as "for a plurality of sensing methods/modes" or "for a given sensing mode" or "for a given use case/sensing area/environment/target device".

For a method/mode of sensing or a plurality of methods/modes of sensing (a method/mode related to the UE, for example, Scenario 3, or Scenario 6, or the UE-based version in Embodiment A0), a plurality of IEs associated in the LPP may be defined.

A plurality of associated IEs that is different/separate may be defined for a plurality of different methods/modes of sensing. Different IEs may be defined for different versions, such as the existing specification of the LPP. In the existing specification of the LPP, a field of NR-PositionCalculationAssistance-r16 in NR-DL-TDOA-ProvideAssistanceData or NR-DL-AoD-ProvideAssistanceData exists for UE-based NR-DL-TDOA, and does not exist otherwise. As such, an IE may be provided only for positioning/sensing of a given version (for example, UE based).

The extension of the LPP may be mainly for the sensing method related to the UE.

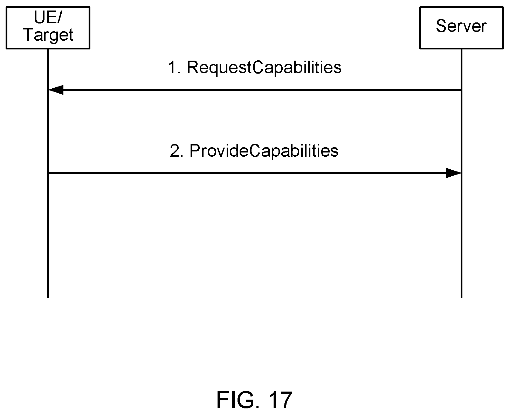

FIG. 17 illustrates a first example of the procedure of the extended LPP. This procedure is an LPP capability transfer procedure. The server transmits a capability request message (RequestCapabilities) to the UE/target. The UE/target then transmits a capability providing message (ProvideCapabilities) to the server.

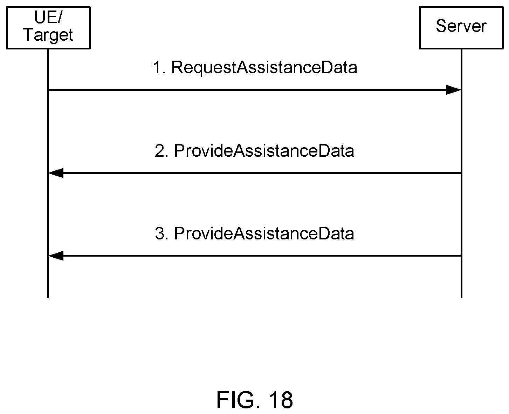

FIG. 18 illustrates a second example of the procedure of the extended LPP. This procedure is an assistance data transfer procedure. The UE/target transmits an assistance data request message (RequestAssistenceData) to the server. The server then transmits an assistance data providing message (ProvideAssistenceData) to the UE/target. The transfer of the assistance data providing message may be performed periodically/semi-persistently/aperiodically.

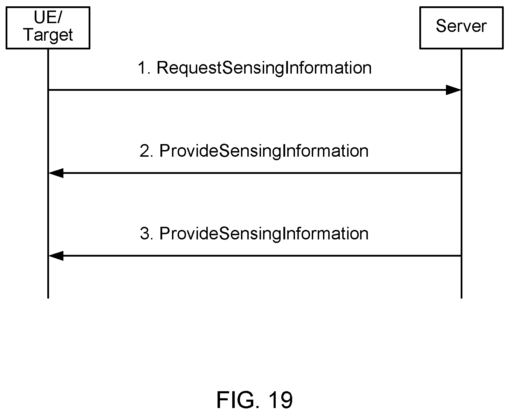

FIG. 19 illustrates a third example of the procedure of the extended LPP. This procedure is a sensing information transfer procedure. The UE/target transmits a sensing information request message (RequestSensingInformation) to the server. The server then transmits a sensing information providing message (ProvideSensingInformation) to the UE/target. The transfer of the sensing information providing message may be performed periodically/semi-persistently/aperiodically.

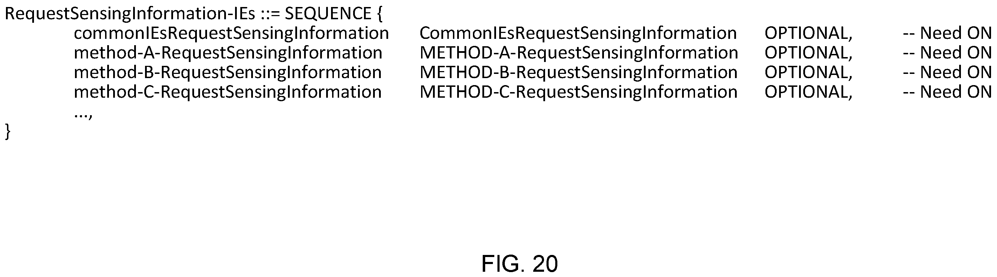

FIG. 20 illustrates a first example of the IE for the extended LPP. In this example, RequestSensingInformation, which is an IE for requesting sensing information, includes IIE (commonIEsRequestSensingInformation) common to a plurality of sensing methods, IE (method-A-RequestSensingInformation) for the sensing method A, IE (method-B-RequestSensingInformation) for the sensing method B, and IE (method-C-RequestSensingInformation) for the sensing method C.

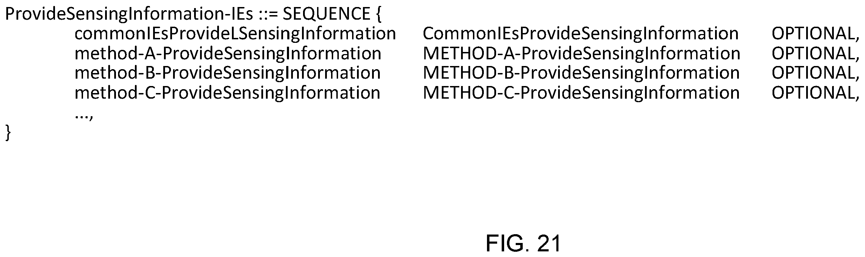

FIG. 21 illustrates a second example of the IE for the extended LPP. In this example, ProvideSensingInformation, which is an IE for providing sensing information, includes IIE (commonIEsProvideSensingInformation) common to a plurality of sensing methods, IE (method-A-ProvideSensingInformation) for the sensing method A, IE (method-B-ProvideSensingInformation) for the sensing method B, and IE (method-C-ProvideSensingInformation) for the sensing method C.

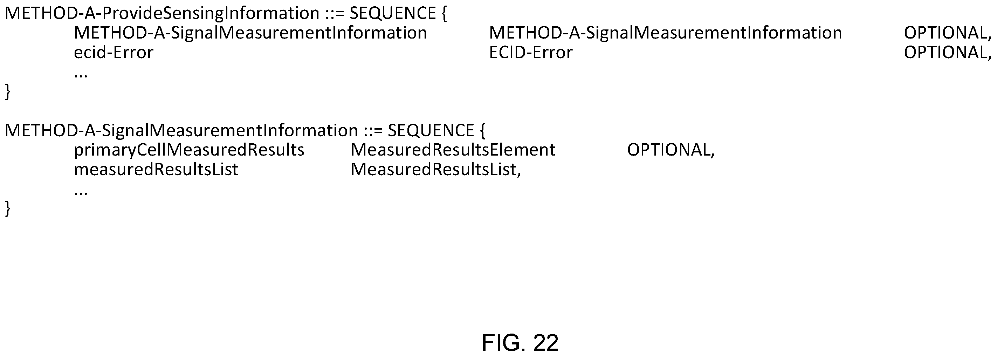

FIG. 22 illustrates a third example of the IE for the extended LPP. In this example, METHOD-A-Provide SensingInformation may include METHOD-A-SignalMeasurementInformation and ecid-Error. The METHOD-A-SignalMeasurementInformation may include primaryCellMeasuredResults and measuredResultsList.

According to the embodiment, the UE/base station can use a suitable architecture/protocol that is extended for sensing.

### <Embodiment A2>

The new architecture and protocol of sensing, unlike the architecture and protocol of NR positioning, may include at least one of the following several features.
- A new AMF for the management of sensing requests is introduced.
- A new function, sensing management function (SMF), for management of co-ordination and scheduling of resources necessary for sensing is introduced.
- A new protocol (like or based on NRPPa) between the NG-RAN node and the new SMF may be introduced.
- A new protocol (like LPP or based on LPP) between the UE and the new SMF may be introduced.

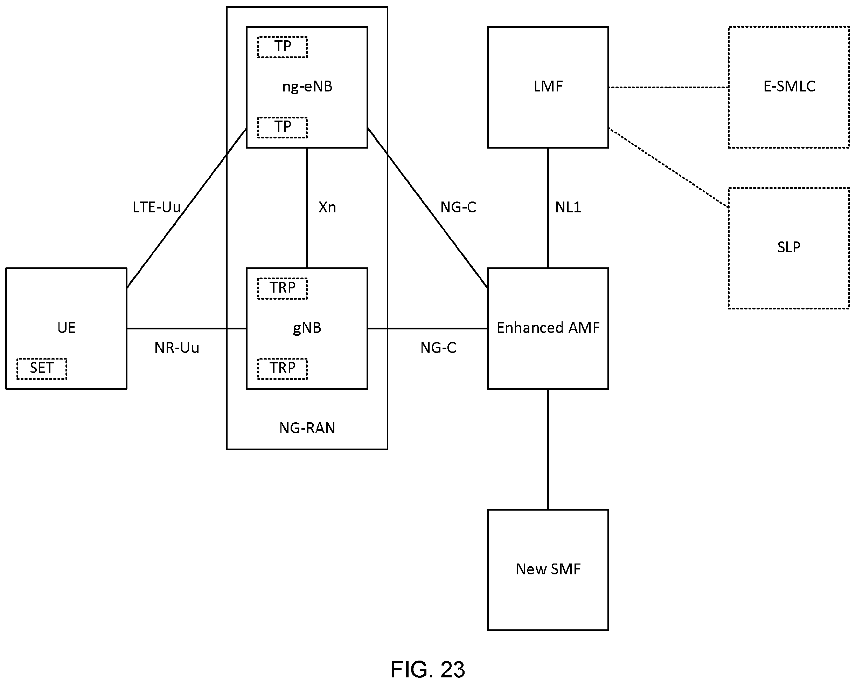

Some architectures/protocols may be reused/diverted/extended (as in Embodiment A1), and some architectures/protocols may be newly introduced (as in Embodiment A2). FIG. 23 illustrates an example of a sensing architecture according to a combination of Embodiment A1 and Embodiment A2. In this example, instead of the AMF in the foregoing NR positioning architecture, the extended AMF in Embodiment A1 is used, and the new SMF in Embodiment A2 is added and connected to the extended AMF.

Details of the procedure and IE for the new protocol may be similar to those in Embodiment A1.

According to the embodiment, the UE/base station can use a suitable architecture/protocol introduced for sensing.

### <Embodiment A3>

The new architecture and protocol of sensing are different from the architecture and protocol of NR positioning, but connected/acted upon with the architecture and protocol of NR positioning, and may include at least one of the following several features.
- An additional AMF is introduced to manage the relationship/adaptation of the sensing request and the positioning request. For example, the sensing request may trigger the positioning request, and the positioning result may be reused/diverted for sensing. For example, a new interface between an existing AMF and an additional AMF may be introduced.
- An additional (new) sensing management function (SMF) is introduced to manage co-ordination, scheduling of resources required for sensing, and positioning relationship/adaptation. For example, some resource/configuration of positioning (for example, PRS) and measurement of RSRP/RSRQ/AoA/AoD/time difference can be reused/diverted for sensing. For example, a new interface between an existing LMF and an additional AMF may be introduced. For example, a new interface between an existing LMF and an additional SMF may be introduced.
- A new protocol (like or based on NRPPa) between the NG-RAN node and the additional SMF may be introduced.
- A new protocol (like LPP or based on LPP) between the UE and the additional SMF may be introduced.

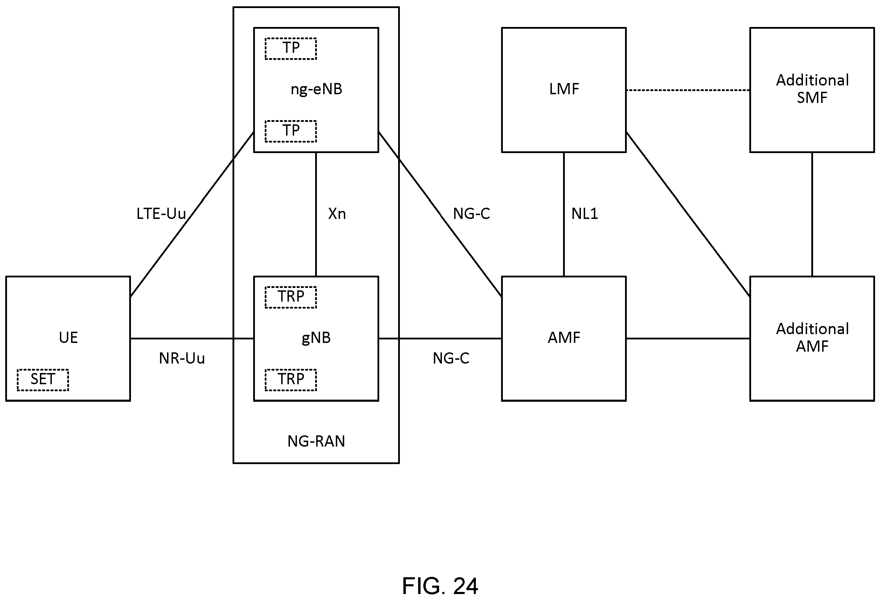

FIG. 24 illustrates an example of a sensing architecture according to Embodiment A3. In this example, an additional SMF is connected to the LMF in the foregoing NR positioning architecture, and an additional AMF is connected to the AMF and the LMF and the additional SMF.

A combination of at least two of Embodiment A1, Embodiment A2, and Embodiment A3 may be possible. Different architectures/protocols may be applied to different embodiments.

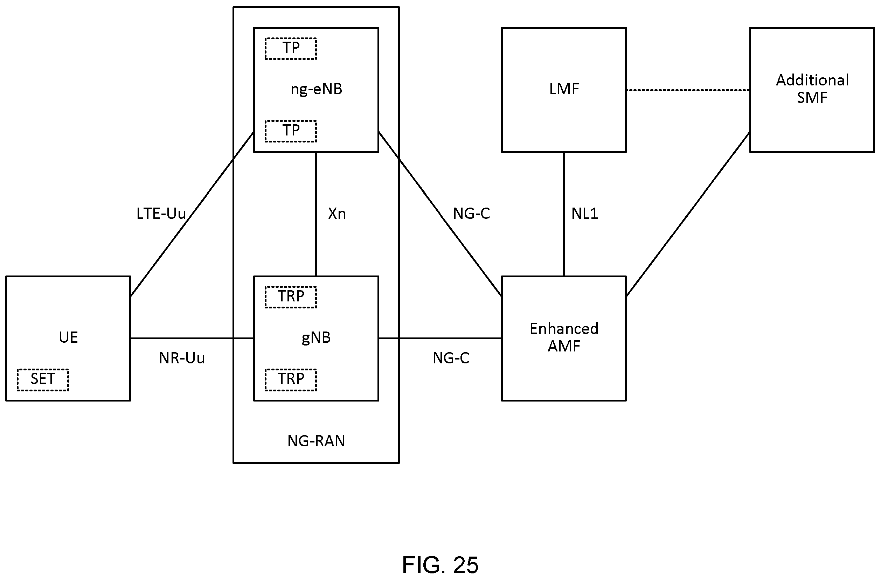

FIG. 25 illustrates an example of a sensing architecture according to a combination of Embodiment A1 and Embodiment A3. In this example, an additional SMF is connected to the AMF and the LMF in the foregoing NR positioning architecture.

According to the embodiment, the UE/base station can use a suitable architecture/protocol for positioning based sensing.

### <Analysis B1>

In BS (gNB)-UE bistatic sensing, a base station (for example, gNB) transmits RS/data (DL sensing resources) used for DL sensing, for example. Then, the UE performs measurement of the RS/data received via the object and reports a sensing result to the NW (for example, gNB).

Different measurement quantities (measurement content/measurement result) may be applied depending on the use case. However, it is not clear as to what measurement quantity the UE measures and reports. Therefore, the present inventors conceived a method of appropriately measuring/reporting a sensing resource.

### <Embodiment B1>

The UE receives and measures (controls the measurement) sensing RS/data (DL sensing resources) transmitted from the base station (gNB) via the object, as in BS (gNB)-UE bistatic sensing. The UE may receive a configuration/instruction related to the measurement quantity (measurement content/measurement result) from the NW (base station) in advance. For example, the measurement quantity may be at least one of the following types.

### [Embodiment B1.1]

The UE may measure a sensing resource (RS/data) and transmit (report) a direct measurement result to the NW (base station). The measurement result may be, for example, at least one of the following Types 1 (1-0 to 1-5).

Type 1-0: At least one of the code phase measurement value (also referred to as a pseudo range), the Doppler measurement value, the carrier phase measurement value (also referred to as a cumulative delta range), the carrier-to-noise ratio of a received signal, the measurement quality parameter of each measurement value, the measurement information about an additional path (Non-Global Navigation Satellite system (GNSS)-related measurement information), the measured cell ID, the RS ID, the measurement timing, the reference signal received power (RSRP), the reference signal received quality (RSRQ), the received signal strength indicator (RSSI), the absolute radio frequency channel number (ARFCN), the receiving-transmitting time difference of the UE, the timestamp, the atmospheric pressure sensor measurement value, the roundtrip time, the measurement characteristic, the reference position, the reference time, the quality for each measurement, and the line-of-sight (LOS)/non-line-of-sight (NLOS) information. These pieces of information may be included in a measurement result of NR positioning for the UE-assisted positioning method.

Type 1-1: At least one of the L3-RSRP, the L3-RSRQ, the L3-RSSI, the L1-RSRP, the L1-Signal to Interference plus Noise Ratio (SINR), the codebook configuration (for example, Type I/II/Port Selection)/Doppler/Non-Coherent Joint Transmission (NCJT) CSI/Coherent Joint Transmission (CJT) CSI, the time domain correlation profile (TDCP).

Type 1-2: Channel Impulse Response (CIR), and other transformations.

Type 1-2': Radar cross section (RCS), and other transformations.

Type 1-3: The power delay profile (PDP), or the delay profile (DP), or the map of range/delay-Doppler/angle.

Type 1-4: At least one of the power, delay, phase, and timing of a channel response.

Type 1-5: At least one measurement quantity of Types 1-1 to 1-4 may be measured per pass/passes. For example, the strongest X paths may be selected for reporting. "The strongest" may mean that the value of each type of measurement quantity is large.

Note that each type of measurement quantity may be reported along with other information (for example, cell ID, RSID, measurement timing, time stamp, LOS/NLOS, quality/reliability of each measurement, and the like).

According to Embodiment B1.1, the UE may determine an appropriate report quantity for the DL sensing resource, and perform appropriate measurement/reporting.

### [Embodiment B1.2]

The UE may perform measurement according to the use case on the sensing resource (RS/data) and transmit (report) a measurement result. The measurement result may be, for example, at least one of the following Types 2 (2-0 to 2-4).

Type 2-0: At least one of latitude/longitude/altitude (having an ungiventy shape), speed (having an ungiventy shape), reference time (for example, having time relevance from GNSS to NG-RAN and ungiventy shape), instruction of the positioning/sensing method used, measured cell ID, RSID, ARFCN, measurement timing, UE position estimation (having an ungiventy shape), timestamp, reference position, reference time, quality per measurement, LOS/NLOS information. These pieces of information may be included in a measurement result of NR positioning for a UE-based positioning method.

Type 2-1: The number of One or a plurality of detected objects.

Type 2-1': Presence or absence of the object to be detected. That is, the reported number may be 0.

Type 2-2: Range of the object to be detected. That is, not only a given place but also a range corresponding to the given place may be used.

Type 2-2': The size of an object to be detected.

Type 2-3: The state of an object to be detected (for example, a speed, a moving direction, a route, a distance to an object, an angle, an object identification result, a shape identification result, a posture identification result, and a substance identification result).

Type 2-4: Reliability.

The UE may measure/report statistics (for example, average value/cumulative distribution function (CDF)/probability density function (PDF), and the like) of the measurement quantity (for example, each type of information described above).

Note that each type of measurement quantity may be measured/reported along with other information (for example, at least one of cell ID, RS ID, measurement timing, time stamp, LOS/NLOS, quality/reliability of each measurement).

The UE may transmit the supported use case as UE capability information. The UE may receive a configuration/instruction of the measurement quantity to be measured for each use case in advance by higher layer signaling/physical layer signaling, and perform measurement/reporting based on the configuration/instruction.

According to Embodiment B1.2, the UE can perform appropriate measurement/reporting on the DL sensing resource according to the use case. As a result, the best communication can be performed for each use case.

### [Embodiment B1.3]

The UE may individually transmit (report) at least one of the direct measurement results (Type 1, that is, any type in Embodiment B1.1) of the measurement and at least one of the measurement results (Type 2, that is, any type in Embodiment B1.2) according to the use case, or may simultaneously transmit (report) them.

Option 1-3-1: The UE may measure and transmit (report) only a measurement quantity of Type 1 (any type in Embodiment B1.1).

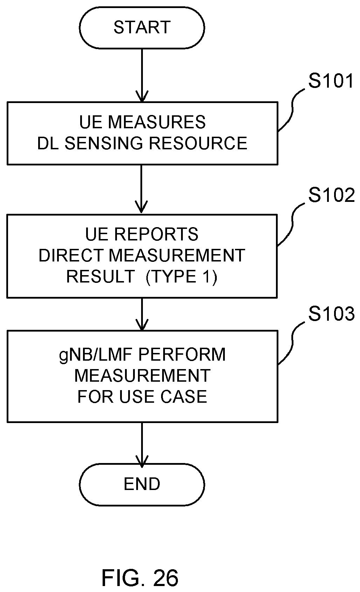

FIG. 26 is a flowchart illustrating an example of Option 1-3-1. The UE measures a DL sensing resource (RS/data) (S101). The UE transmits (reports), to the gNB/LMF, the direct measurement result (measurement result of Type 1, for example, related to CSI) based on the measurement in S101 (S102). The gNB/LMF performs calculation/processing/measurement according to the use case based on the reported measurement result and acquires a final sensing result (S103). The sensing result in S103 corresponds to the measurement result of Type 2 (any type of Embodiment B1.2).

According to Option 1-3-1, the measurement by the UE is only for Type 1, so that a processing amount of the UE can be reduced.

Option 1-3-2: The UE may acquire and transmit (report) a measurement result of Type 2 (any type of Embodiment B1.2) based on the measurement result of Type 1 (any type of Embodiment B1.1).

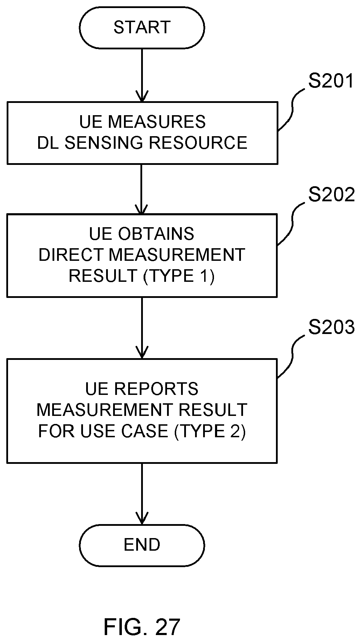

FIG. 27 is a flowchart illustrating an example of Option 1-3-2. The UE measures a DL sensing resource (RS/data) (S201). The UE acquires a direct measurement result (measurement result of Type 1, for example, related to CSI) based on the measurement in S201 (S202). The UE performs calculation/processing/measurement according to the use case based on the measurement result in S202, acquires the final sensing result, and reports the final sensing result to the gNB/LMF (S203). The sensing result in S203 corresponds to the measurement result of Type 2 (any type of Embodiment B1.2).

According to Option 1-3-2, the UE also acquires the measurement result of Type 2, so that processing according to the measurement result can be quickly performed. The UE may select the transmission content according to the measurement result of Type 2.

Option 1-3-3: The UE may transmit (report) a measurement result (all or part of a measurement result) of Type 1 (any type of Embodiment B1.1) and a measurement result (all or part of a measurement result) of Type 2 (any type of Embodiment B1.2).

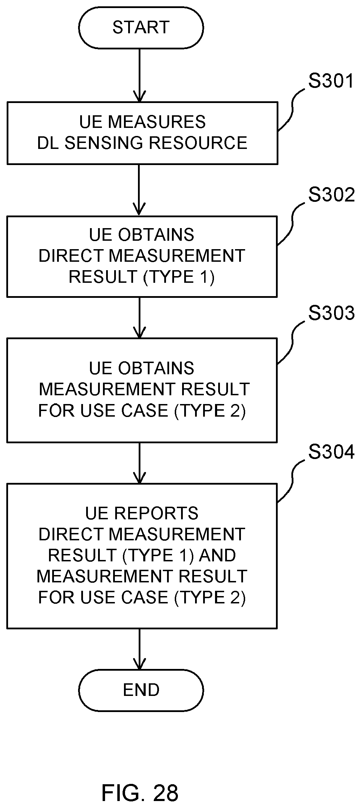

FIG. 28 is a flowchart illustrating an example of Option 1-3-3. The UE measures a DL sensing resource (RS/data) (S301). The UE acquires a direct measurement result (measurement result of Type 1, for example, related to CSI) based on the measurement in S301 (S302). The UE performs calculation/processing/measurement according to the use case based on the measurement result in S302, and acquires a measurement result (all or part of the measurement result) (S303). The sensing result in S303 corresponds to the measurement result of Type 2 (any type of Embodiment B1.2). The UE reports the direct measurement result (all or part of the measurement result) in S302 and the measurement result (all or part of the measurement result) according to the use case in S303 to the gNB/LMF (S304).

According to Option 1-3-3, the UE can select and transmit (report) a measurement result to be transmitted from among the measurement results of Type 1 and Type 2 according to a use case or the like.

The following Options 1-3-4 and 1-3-5 may be applied to a transmission method when the UE transmits (reports) a measurement result.

Option 1-3-4: The UE may transmit the measurement result to the NW using PUCCH/PUSCH as UCI (CSI or other UL control information) or MAC CE or Radio Resource Control (RRC) information element (IE).

Option 1-3-5: The UE may transmit the result to an extended LMF for sensing or a new SMF/Sensing Function (SF) using an extended LPP protocol for sensing or a new LPP protocol for sensing or a protocol based on the LPP protocol. The extended LMF, the new SMF, the LPP protocol, or the protocol based on the LPP protocol may correspond to the above sensing architecture and protocols (1) and (2).

### [Variation]

In a case where at least one report quantity of each type exceeds a threshold value, the UE may transmit (report) the report quantity. The threshold value may be preconfigured/specified by higher layer signaling/physical layer signaling. The threshold value may be different for each object/path.

Different methods may be used for transmission methods of the measurement result of Type 1 and the measurement result of type 2, or the same transmission method may be used. For example, the UE may transmit the measurement result of Type 1 on the PUCCH, and transmit the measurement result of Type 2 on the PUSCH. Protocols for transmitting Type 1 and Type 2 may be different.

According to the embodiment, a measurement quantity/measurement method in sensing between the BS (gNB) and the UE is clarified. Accordingly, the UE can appropriately measure/report the DL sensing resource, so that it is possible to prevent a degradation of sensing accuracy/communication quality.

### <Analysis B2>

As described in Embodiment B1, in a case where the measurement quantity and the measurement method of the DL sensing resource are applied, it is not clear what kind of configuration is performed on the UE and what kind of operation the UE performs. For example, configuration/selection related to the spatial transmission filter/spatial reception filter is not clear. Therefore, the present inventors have conceived a configuration/operation method of appropriately receiving/measuring/reporting a sensing resource.

### <Embodiment B2>

The following Options may be applied to the configuration related to the measurement of the DL sensing resource and the report corresponding to the configuration. The UE may receive, from the NW (for example, the base station), a configuration/instruction indicating that the same measurement RS resource (DL sensing resource) is repeatedly transmitted R times (R>=1) in consecutive symbols/slots/given time units. Then, the UE may receive and measure (may control the measurement) the RS resources (DL sensing resources) repeatedly transmitted based on the configuration/instruction via the object.

The present embodiment may be applied in combination with Embodiment B1. That is, the UE may receive downlink (DL) sensing resources repeatedly transmitted from the base station (gNB) and received via the object, and control measurement of the repeatedly transmitted DL sensing resources.

### [Embodiment B2.1]

The same spatial transmission filter may be used for each of the repeatedly transmitted RS resources (DL sensing resources). The UE may receive, from the NW, a configuration/instruction regarding RS resources that are repeatedly transmitted using the same spatial transmission filter (for example, the same TCI state/QCL-D source RS). For example, in a case where the base station is able to identify/infer the position (range) of the object, repeated transmissions using the same spatial transmission filter (beam) can improve the measurement accuracy of the UE.

### <<Option 1>>

The UE may change the spatial reception filter for each measurement. The UE may determine the spatial reception filter without using a configuration/instruction. In this case, the UE may apply the following Options 1-1 to 1-3. In a case of reporting the measurement quantity (measurement result) of Embodiment B1, the following Options 1-1 to 1-3 may be further applied.

Option 1-1: The UE may select/report one (best) measurement result for one measurement sample for reporting. The UE may then further report information/assumptions about the selected spatial reception filter (for example, TCI state, QCL resource RS ID, beam ID, DL/UL RS ID, etc.) corresponding to the selected/reported measurement results.

Option 1-2: The UE may select up to X (best) measurement results/measurement RSs for reporting. Here, X<=R, and X may be configured by the RRC based on UE capability transmitted by the UE. The UE may then report the selected measurement result and further report information/assumptions about the spatial reception filter for receiving the selected measurement RS.

Option 1-2-1: The UE reports a measurement quantity of X resources. In this case, the overhead increase is X times for one resource.

Option 1-2-2: In a case where some measurement quantities for the X resources are the same, the UE may report the same measurement quantity only once. In a case where the measurement quantities for the X resources are different, the UE may report the measurement quantities for the X resources. This can reduce the report with the same measurement quantity, thereby suppressing overhead.

Option 1-3: The UE may perform averaging/filtering process on X (for example, the best X) measurement results and report one processed measurement result. The UE may transmit X as UE capability information or X may be configured by RRC signaling.

Selection by the UE in Options 1-1 and 1-2 may be based on, for example, a calculation result such as highest strength/lowest strength/average strength/range/quality/probability of a measurement result, or may be based on a given rule.

The UE may assume that the spatial transmission filter for RS transmission and the spatial reception filter for RS reception are the same.

### <<Option 2>>

The spatial reception filter of the UE for each measurement may be configured by the NW. In this case, Options 1-1 to 1-3 may be similarly applied. However, in Option 2, the UE may not report information/assumptions about the spatial reception filter.

Option 2 may be applied only in a case where R=1.

In a case where a given spatial reception filter is applied, the UE may not detect the sensing RS.

The UE may transmit in advance the capability about the spatial reception filter for receiving the measurement RS as UE capability information.

### [Embodiment B2.2]

Different spatial transmission filters may be used for the respective RS resources (DL sensing resources) that are repeatedly transmitted. The UE may receive, from the NW, configurations/instructions of R sensing resources that are repeatedly transmitted using different spatial transmission filters (for example, via the RS of the TCI state/QCL-D). For example, in a case where it is difficult for the base station to identify/infer the position (range) of the object, by repeatedly transmitting the resources using different spatial transmission filters (beams), the UE can perform accurate measurement regardless of the object position.

### <<Option 1>>

The UE may use the same spatial reception filter for each measurement. The UE may determine the spatial reception filter without using a configuration/instruction. In this case, the UE may apply the following Options 1-1 to 1-3. In a case of reporting the measurement quantity (measurement result) of Embodiment B1, the following Options 1-1 to 1-3 may be further applied.

Option 1-1: The UE may select one (best) measurement result for one measurement sample for reporting. The UE may then further report information/assumptions about the selected spatial transmission filter (for example, a TCI state, an RS ID of a QCL resource, a beam ID, a reordered RS index, etc.) corresponding to the selected/reported measurement results. The UE may or may not report information/assumptions about the spatial reception filter.

Option 1-2: The UE may select up to X (X best) measurement results for reporting. Here, X<=R, and X may be configured by the RRC based on UE capability transmitted by the UE. The UE may then further report information/assumptions about the selected RS/spatial transmission filter corresponding to the selected/reported measurement results. The UE may not report information/assumptions about the spatial reception filter.

Option 1-2-1: The UE reports a measurement quantity of X resources. In this case, the overhead increase is X times for one resource.

Option 1-2-2: In a case where some measurement quantities for the X resources are the same, the UE may report the same measurement quantity only once. In a case where the measurement quantities for the X resources are different, the UE may report respective measurement quantities for the X resources. This can reduce the report with the same measurement quantity, thereby suppressing overhead.

Option 1-3: The UE may perform averaging/filtering process on X (for example, the best X) measurement results and report one processed measurement result. The UE may transmit X as UE capability information, or X may be configured by RRC signaling or the like.

Selection by the UE in Options 1-1 and 1-2 may be based on, for example, a calculation result such as highest strength/lowest strength/average strength/range/quality/probability of a measurement result, or may be based on a given rule.

### <<Option 2>>

The UE may use the same spatial reception filter for each measurement. The spatial reception filter of the UE for each measurement may be configured by higher layer signaling/physical layer signaling or the like by the NW. The UE may report the configured report quantity as in Embodiment B1. In Option 2, Options 1-1 to 1-3 may be similarly applied. However, in Option 2, the UE may not report information/assumptions about the spatial reception filter.

### <<Option 3>>

The UE may use different spatial reception filters for each measurement. The spatial reception filter of the UE for each measurement may be determined by the UE. The UE may report the configured report quantity as in Embodiment B1. In Option 3, Options 1-1 to 1-3 may be similarly applied.

### <<Option 4>>

The UE may use different spatial reception filters for each measurement. The spatial reception filter of the UE for each measurement may be configured by higher layer signaling/physical layer signaling or the like by the NW. The UE may report the configured report quantity as in Embodiment B1. In Option 4, Options 1-1 to 1-3 may be similarly applied. However, in Option 4, the UE may not report information/assumptions about the spatial reception filter.

In a case where a given spatial reception filter is applied, the UE may not detect the sensing RS.

The UE may transmit in advance the capability about the spatial reception filter for receiving the measurement RS as UE capability information.

According to the embodiment, a method of configuring/selecting the spatial transmission filter/spatial reception filter and the like in sensing between the BS (gNB) and the UE, and the like is clarified. As a result, the UE can appropriately receive and measure/report the DL sensing resource (beam), so that it is possible to prevent a degradation of sensing accuracy/communication quality.

### <Analysis B3>

In UE-BS (gNB) bistatic sensing, the UE transmits RS/data (UL sensing resources) used for UL sensing, for example. Then, the base station (for example, gNB) performs measurement of the RS/data received via the object, and reports a sensing result.

Different measurement quantities (measurement content) may be applied depending on the use case. However, it is not clear as to what measurement quantity the gNB measures and reports. Therefore, the present inventors conceived a method of appropriately measuring/reporting a sensing resource.

### <Embodiment B3>

The base station (gNB) receives and measures sensing RS/data (UL sensing resource) transmitted from the UE via the object, as in UE-BS (gNB) bistatic sensing. The gNB may transmit (report) the measurement quantity (measurement result) to the UE, the sensing extended LMF or the new SMF/SF using a protocol based on an extended NR positioning protocol A (NRPPa) for sensing or a new NRPPa protocol for sensing. The measurement quantity (measurement result) may be, for example, at least one of the following types.

### [Embodiment B3.1]

The base station (gNB) may measure the sensing resource (RS/data) and transmit (report) the direct measurement results. The measurement result may be, for example, at least one of the following types 3 (3-0 to 3-4).

Type 3-0: At least one of the cell ID, the timing advance, the angle of arrival (azimuth angle, elevation angle), the RSRP, the RSRQ, the RSSI, the ARFCN, the timing information of cell/TRP/RS, the configuration of DL/UL sensing RS (SSB/CSI-RS/Positioning Reference Signal (PRS)/SRS/new RS) of cell/TRP, the receiving-transmitting time difference at gNB, the timestamp, the quality of each measurement, the beam information of each measurement, and the LoS/NLoS. These pieces of information may be included in a measurement result of NR positioning for the gNB-based positioning method.

Type 3-1: CIR, and other transformations.

Type 3-1': Radar Cross-Section (RCS) and other transformations.

Type 3-2: The power delay profile (PDP), or the delay profile (DP), or the map of range/delay-Doppler/angle.

Type 3-3: At least one of the power, delay, phase, and timing of a channel response.

Type 3-4: At least one measurement quantity of Types 3-1 to 3-3 may be measured per pass/passes. For example, the strongest X paths may be selected for reporting.

Note that each type of measurement quantity may be reported along with other information (for example, cell ID, RSID, measurement timing, time stamp, LOS/NLOS, quality/reliability of each measurement, and the like).

According to Embodiment B3.1, the gNB can determine an appropriate report quantity for the UL sensing resource, and perform appropriate measurement/reporting.

### [Embodiment B3.2]

The gNB may perform measurement according to the use case on the UL sensing resource (RS/data) and transmit (report) the measurement result. The measurement result may be, for example, at least one of the following types 4 (4-1 to 4-4).

Type 4-1: One or a plurality of detected targets.

Type 4-1': Presence or absence of the object to be detected. That is, the reported number may be 0.

Type 4-2: Range of the object to be detected. That is, not only a given place but also a range corresponding to the given place may be used.

Type 4-2': The size of the object to be detected.

Type 4-3: The state of the object to be detected (for example, a speed, a moving direction, a route, a distance to an object, an angle, an object identification result, a shape identification result, a posture identification result, and a substance identification result).

Type 4-4: Reliability.

The UE may measure/report statistics (for example, average value/cumulative distribution function (CDF)/probability density function (PDF), and the like) of the measurement quantity (for example, each type of information described above).

The gNB may individually transmit (report) at least one of the direct measurement results (Type 3, that is, any type in Embodiment B3.1) of the measurement and at least one of the measurement results (Type 4, that is, any type in Embodiment B3.2) according to the use case, or may simultaneously transmit (report) them.

Note that each type of measurement quantity may be reported along with other information (for example, cell ID, RSID, measurement timing, time stamp, LOS/NLOS, quality/reliability of each measurement, and the like).

An example of Embodiment B1.3 may be similarly used for Embodiment B3.1 and Embodiment B3.2. That is, in Embodiment B1.3, Type 1 may be replaced with Type 3 and applied, Type 2 may be replaced with Type 4 and applied, DL may be replaced with UL and applied, UE may be replaced with gNB and applied, and gNB/LMF (destination) may be replaced with LMF/SMF/SF and applied.

The gNB may receive a configuration/instruction of the measurement quantity to be measured for each use case in advance by higher layer signaling/physical layer signaling, and perform measurement/reporting based on the configuration/instruction.

According to Embodiment B3.2, the gNB can perform appropriate measurement/reporting on the UL sensing resource according to the use case. As a result, the best communication can be performed for each use case.

### <Analysis B4>

As described in Embodiment B3, in a case where the measurement quantity and the measurement method of the UL sensing resource are applied, it is not clear what kind of configuration is performed on the gNB and what kind of operation the gNB/UE performs. For example, configuration/selection related to the spatial transmission filter/spatial reception filter is not clear. Therefore, the present inventors have conceived a configuration/operation method of appropriately receiving/measuring/reporting a sensing resource.

### <Embodiment B4>

The following Options may be applied to the configuration related to the measurement of the UL sensing resource, the report corresponding to the configuration, the RS transmission from the UE, and the like. The NW (Base Station, gNB) may transmit, to the UE, a configuration/instruction instructing that the same UL RS resource (UL sensing resource) is repeatedly transmitted R times (R>=1) in consecutive symbols/slots/given time units. The gNB may receive and measure (may control the measurement) UL RS resources (UL sensing resources) repeatedly transmitted from the UE via the object.

Option A: The NW may configure, in the UE, an RS resource repeatedly transmitted in the same spatial transmission filter. The spatial transmission filter may be determined by the UE.

Option B: The NW may configure, in the UE, an RS resource repeatedly transmitted in the same spatial transmission filter. The same spatial transmission filter may be configured/specified by the NW (for example, using a TCI state ID or a QCL-D source RS).

Option C: The NW may configure, in the UE, an RS resource repeatedly transmitted in different spatial transmission filters. The spatial transmission filter may be determined by the UE.

Option D: The NW may configure, in the UE, an RS resource repeatedly transmitted in different spatial transmission filters. The spatial transmission filter may be determined by the NW.

In Options A-D, the NW (gNB) may use the same or different spatial reception filters. In a case where the gNB measures a sensing resource (RS/data) and reports a measurement result as in Embodiment B3, the following Options 1 to 3 may be applied.

Option 1: The gNB may select one (best) measurement result for one measurement sample for reporting. The gNB may report information/assumptions about the selected RS/spatial transmission filter (for example, a TCI state, an RS ID of a QCL resource, a beam ID, a reordered RS index, or the like) corresponding to the selected/reported measurement results. The gNB may or may not report information/assumptions about the spatial reception filter.

Option 2: The gNB may select up to X (X best) measurement results for reporting. Here, X<=R, and X may be configured by the RRC based on UE capability transmitted by the UE. The gNB may then further report information/assumptions about the selected RS/spatial transmission filter corresponding to the selected/reported measurement results.

Option 2-1: The gNB reports measurement quantities of the X resources. In this case, the overhead increase is X times for one resource.

Option 2-2: In a case where some measurement quantities for the X resources are the same, the gNB may report the same measurement quantity only once. In a case where the measurement quantities for the X resources are different, the gNB may report respective measurement quantities for the X resources. This can reduce the report with the same measurement quantity, thereby suppressing overhead.

Option 3: the gNB may perform averaging/filtering process on X (for example, the best X) measurement results and report one processed measurement result. X may be configured by RRC signaling or the like.

The selection of the gNB in Options 1 and 2 may be based on, for example, a calculation result such as highest intensity/lowest intensity/average intensity/range/quality/probability of a measurement result, or may be based on a given rule.

In a case where the NW configures the UE having different spatial transmission filters, a gap for repeatedly transmitting UL sensing resources may be configured. The gap may be defined in a specification or may be transmitted by the UE as UE capability information. The gap is a time interval between transmissions of the RS using different spatial transmission filters.

According to the embodiment, a method of configuring/selecting the spatial transmission filter/spatial reception filter and the like in sensing between the UE and the BS (gNB) is clarified. As a result, the gNB can appropriately receive and measure/report the UL sensing resource (beam), so that it is possible to prevent a degradation of sensing accuracy/communication quality.

### <Analysis C1>

In gNB monostatic sensing, as an object moves, the gNB may lose tracking of the object. Before that, the gNB may trigger a mobility procedure of finding another gNB to continue the sensing function on the object, or may trigger a mobility procedure of changing to another sensing method with higher accuracy.

Details are described in Embodiment C1/Embodiment C2 for a gNB monostatic sensing method, and differences from Embodiment C1/Embodiment C2 are described with respect to other sensing methods.

In the present disclosure, signaling between the gNB/UE and the SMF may be performed according to Embodiment A. In the present disclosure, signaling from the gNB to the UE may follow signaling based on the RRC IE/MAC CE/DCI.

### <Embodiment C1>

The embodiment relates to a mobility procedure for sensing.

The definition of sensing mobility may include a change in at least one of the gNB, the UE, and the sensing method/mode.

In the present disclosure, a source/target gNB/UE, a TRP, an IAB, an NCR, an RIS, and a network controlled access point (NCAP) may be read interchangeably with each other.

The triggering of the mobility procedure may be determined by at least one node of the following several Choices.
◇Choice 1: Extended LMF/new SMF/new AMF. In the present disclosure, the SMF may represent an extended LMF/new SMF/new AMF/SF. The SMF may trigger the mobility procedure based on a measurement result reported from the gNB or a result processed in the SMF.
◇Choice 2: Source gNB. The source gNB may trigger a mobility procedure based on the results measured or processed by the source gNB.

The one or more target gNBs for mobility may be determined by at least one node of the following several Choices. The node may or may not determine the method/mode of target sensing.
◇Choice 3: SMF.
◇Choice 4: Source gNB. It is more suitable than the SMF for determining the sensing method/mode.

The combination of Choice 1 and Choice 4 is not preferable. In a case where the SMF determines a mobility procedure, the SMF may determine one or more target gNBs.

The one or more target gNBs may be in accordance with at least one of the following several cases.
◇Case 1: One target gNB using gNB monostatic sensing.
◇Case 2: One gNB-gNB pair using gNB-gNB bistatic sensing. The pair may be two target gNBs, or may be one main gNB and one coordinated gNB.
◇Case 3: One gNB-UE pair using gNB-UE bistatic sensing.
◇Case 4: One gNB-UE pair using UE-gNB bistatic sensing.
◇Case 5: One target gNB using gNB-UE bistatic sensing. After the mobility procedure, the UE may be selected and configured by the target gNB.
◇Case 6: One target gNB using UE-gNB bistatic sensing. After the mobility procedure, the UE may be selected and configured by the target gNB.
◇A plurality of targets in each case, and a plurality of targets from a combination of different cases may be possible.

There may or may not be a constraint between the node that determines the triggering of the mobility procedure (Choice 1/2) and the node that determines the one or more target gNBs (Choice 3/4). The constraint may be at least one of the following several examples.
◇The node that determines the triggering of the mobility procedure is the same as the node that determines the one or more target gNBs.
◇In a case where the node that determines the triggering of the mobility procedure is a gNB, the node that determines one or more target gNBs may be an SMF or a gNB. In a case where the node that determines the triggering of the mobility procedure is the SMF, the node that determines the one or more target gNBs may be the SMF.

The condition/event for the SMF/gNB that determine the mobility/handover procedure/triggering may be performed according to at least one of the following several Options.
◇Option 1: The condition/event depends on the implementation of the SMF/gNB.
◇Option 2: The condition/event is defined in the specification for sensing. The condition/event may be performed according to at least one of the following several Options 2-x.
   - ◇Option 2-1: For a Type 3 measurement quantity related to a direct sensing resource measurement result, the event is established in a case where the result/value/quantity/accuracy/probability of the measurement is lower or higher than a defined/configured threshold value, or is within a defined/configured range. The Type 3 measurement quantity may be in accordance with at least one of Embodiments B1 to B4. The Type 3 measurement quantity may be measured/calculated by the gNB.
   - ◇Option 2-2: For a Type 4 measurement quantity associated with sensing results for a use case, the event is established in a case where the result/value/quantity/accuracy/probability of the measurement is lower or higher than a defined/configured threshold value or is within a defined/configured range. The Type 4 measurement quantity may be in accordance with at least one of Embodiments B1 to B4. The Type 4 measurement quantity may be measured/calculated by the gNB/SMF.
   - ◇Variation 1: The event may be that the result/value/quantity/accuracy/probability of the measurement being lower (worse) or higher (better) than a defined/configured threshold value, or being within a defined/configured range may last for a given time, or may occur a given number of times. The given time or the given number of times (threshold value) may be defined in the specification or may be configured by the RRC IE.
   - ◇Variation 2: The event is established in consideration of one or more objects. The number of objects may be defined in the specification or may be configured by the RRC IE.
   - ◇Variation 3: For a plurality of different measurement quantities, one common condition/event may be applied or a plurality of individual conditions/events may be applied.

According to the embodiment, a mobility procedure can be properly performed.

### <Embodiment C2a>

The embodiment relates to a case (case in which a mobility procedure is triggered by the source gNB, and the target gNB is determined by the SMF) of a combination of Choice 2 and Choice 3 in Embodiment C1 in gNB monostatic sensing.

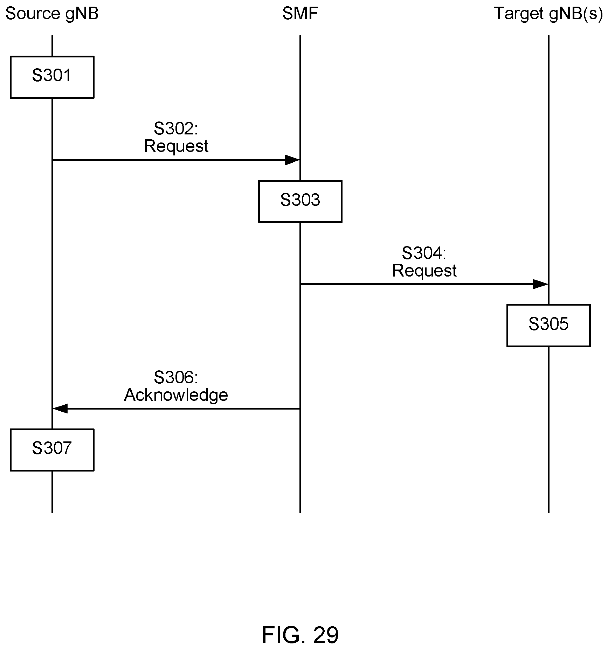

As in the example of FIG. 29, in a case where the condition/event in Embodiment C1 occurs in the gNB (S301), the source gNB may transmit a sensing handover request (SENSING HANDOVER REQUEST) message to the SMF (S302). The SMF may identify at least one of one or more target gNBs and one or more target sensing modes corresponding thereto (S303), and may transfer a SENSING HANDOVER REQUEST to the one or more target gNBs, or may transmit a new sensing request with reconfiguration of sensing-related configurations to the one or more target gNBs (S304). Thereafter, the SMF may transmit a sensing handover request acknowledge (SENSING HANDOVER REQUEST ACKNOWLEDGE) message to the source gNB (S306). The source gNB may continue or stop the sensing-related behavior based on the information from the SMF (S307). The continuation may include an update. The target gNB may process the request from the SMF (S305).

In the present disclosure, the sensing-related configuration may be a configuration of the sensing mode/measurement RS/object/use case/measurement/report/coordinated gNB/UE to be paired.

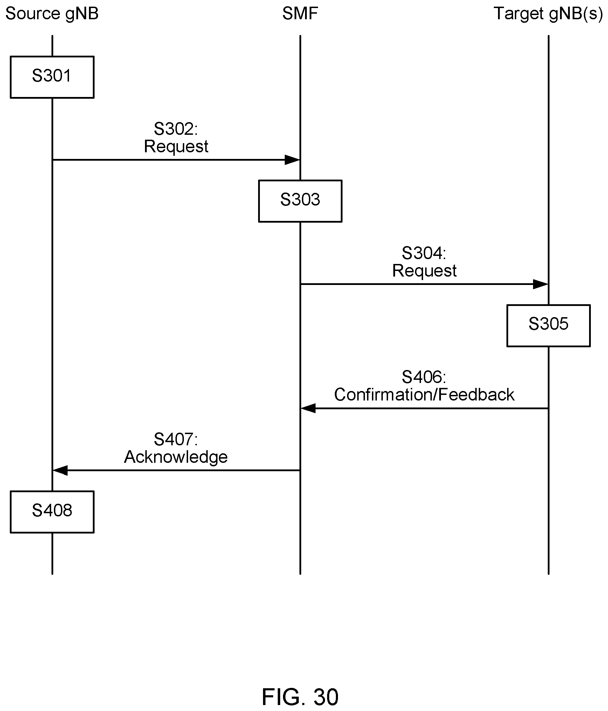

Variation: As in the example of FIG. 30, after S305, the SMF may receive a message such as confirmation/feedback from one or more target gNBs (S406), and then transmit SENSING HANDOVER REQUEST ACKNOWLEDGE to the source gNB (S407). One or more target gNBs may determine the sensing-related configuration by themselves and transmit the sensing-related configuration to the SMF in a message such as confirmation/feedback. The source gNB may continue or stop the sensing-related behavior based on the information from the SMF (S408). The continuation may include an update.

After the SMF receives a failure/fault message from the one or more target gNBs or after failing to receive any message from the one or more target gNBs, for a given time, in a case where the source gNB receives a NACK from the SMF, or fails to receive any message from the SMF, for a given time, the source gNB fails to proceed with the mobility procedure to the one or more target gNBs. The failure/fault may be claimed/transferred/executed in the source gNB or the SMF. The procedure in a case where the request (SENSING HANDOVER REQUEST) fails may be performed according to at least one of the following several Options.
◇Option 1: The procedure depends on the implementation of the NW.
◇Option 2: The SMF retransmits the request to the same one or more target gNBs.
◇Option 3: The SMF re-performs the determination of the one or more target gNBs and transmits the request to the new one or more target gNBs.
◇Option 4: The source gNB retransmits the request to the SMF.

SENSING HANDOVER REQUEST may include at least one of the following several pieces of information.
OAt least one of one or more sensing object IDs, the information related to another object, the environment ID, the environment-related information, the motion ID, and the motion-related information.
OAt least one of the ID related to a sensing use case and the sensing service category.
◇Sensing Source gNB ID.
OAt least one of one or more sensing target gNB IDs and the sensing mode in the one or more target gNBs.
◇One or more IDs for the mode/method of sensing being used (in the source gNB).
◇Sensing RS configuration (in the source gNB).
◇Sensing measurement/reporting configuration (in the source gNB).
◇One or more sensing measurement quantities of one or more objects (IDs) (in the source gNB).
◇Sensing measurement result for at least one of the corresponding measurement quantity and measurement timing (in the source gNB).
OThe sensing measurement result history and the corresponding sensing mode/method.
◇ID of the condition/event triggered.
◇Other configurations/information related to the one or more sensing tasks for the one or more object IDs (in the source gNB).
◇Estimated sensing error related information. For example, an incomplete calibration error between the transmission antenna and the reception antenna in the gNB.
◇Current sensing resolution.

SENSING HANDOVER REQUEST ACKNOWLEDGE may include at least one of the following several pieces of information.
◇An indicator for at least one of release of the original sensing configuration, stop of the original sensing behavior, and continuation/update of the original sensing behavior.
◇At least one of one or more sensing object IDs, the information related to another object, the environment ID, the environment-related information, the motion ID, and the motion-related information.
◇At least one of the ID related to a sensing use case and the sensing service category.
◇One or more sensing target gNB IDs. It may include either one gNB ID for monostatic sensing, two gNB IDs for gNB-gNB bistatic sensing, or a gNB ID with/without a UE ID to be paired for gNB-UE bistatic sensing or UE-gNB bistatic sensing. The two gNB IDs may be an ID of one main gNB and an ID of one coordinated gNB.
◇One or more IDs for the mode/method of sensing being used (in the target gNB).
◇Sensing RS configuration (in the target gNB).
◇Sensing measurement/reporting configuration (in the target gNB).
◇One or more sensing measurement quantities of one or more objects (IDs) (in the target gNB).
◇Other configurations/information related to the one or more sensing tasks for the one or more object IDs (in the target gNB).
◇Estimated sensing error related information. For example, an incomplete calibration error between the transmission antenna and the reception antenna in the target gNB.
◇Current sensing resolution.

According to the embodiment, in gNB monostatic sensing, in a case in which a mobility procedure is triggered by a source gNB and a target gNB is determined by an SMF, the mobility procedure can be appropriately performed.

### <Embodiment C2b>

The embodiment relates to a case (case in which the mobility procedure is triggered by the source gNB and the target gNB is determined by the source gNB) of a combination of Choice 2 and Choice 4 in Embodiment C1 in gNB monostatic sensing.

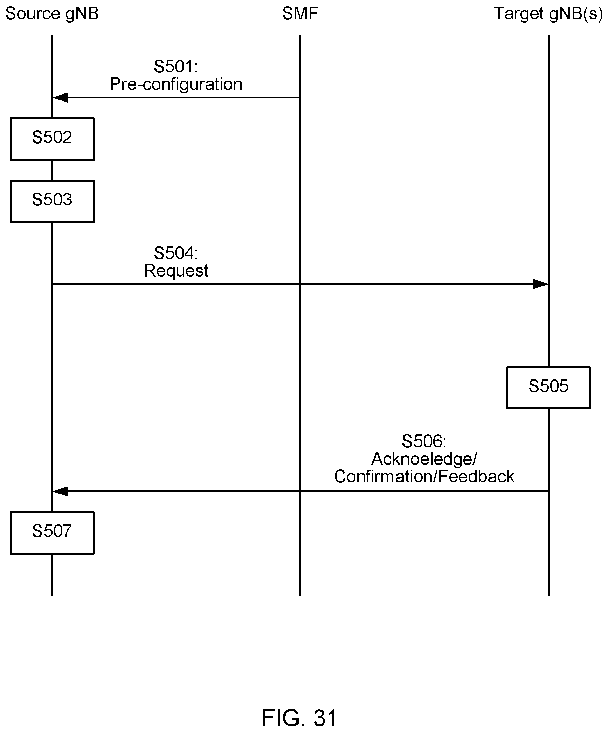

As in the example of FIG. 31, the SMF may transmit the configuration (pre-configuration) for the sensing/mobility procedure to the source gNB (S501). In a case where the condition/event in Embodiment C1 occurs in the gNB (S502), the source gNB may determine at least one of the one or more target gNBs and the corresponding one or more target sensing modes (S503). The determination may be performed according to at least one of the following several Options.
◇Option 1: The determination depends on implementation. For example, the determination is based on an estimation of the movement path of the object.
◇Option 2: The determination is based on configuration/instruction from the SMF. The configuration/instruction may be a configuration/instruction for at least one of a given use case and a given object.

The source gNB may directly transmit a SENSING HANDOVER REQUEST message to one or more target gNBs (S504). The one or more target gNBs may process the SENSING HANDOVER REQUEST information, take over and engage in the sensing task for the specified object ID (S505), and transmit a SENSING HANDOVER REQUEST ACKNOWLEDGE message to the source gNB (S506). The source gNB may continue or stop the transmission/measurement behavior of the sensing measurement RS (S507). The continuation may include an update.

The content of SENSING HANDOVER REQUEST and SENSING HANDOVER REQUEST ACKNOWLEDGE may be similar to those in Embodiment C2a. SENSING HANDOVER REQUEST ACKNOWLEDGE may include a message such as confirmation/feedback, or may include a sensing-related configuration from one or more target gNBs.

According to the embodiment, in gNB monostatic sensing, in a case in which a mobility procedure is triggered by the source gNB and a target gNB is determined by the source gNB, the mobility procedure can be appropriately executed.

### <Embodiment C2c>

The embodiment relates to a case (case in which the mobility procedure is triggered by the SMF and the target gNB is determined by the SMF) of a combination of Choice 1 and Choice 3 in Embodiment C1 in gNB monostatic sensing.

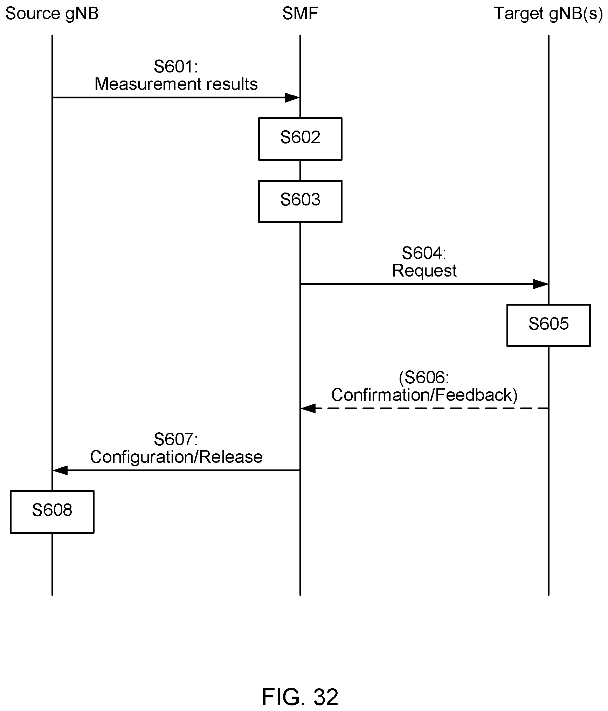

As in the example of FIG. 32, the source gNB may transmit the sensing measurement report to the SMF (S601). In a case where the condition/event in Embodiment C1 occurs in the SMF (S602), the SMF determines at least one of the one or more target gNBs and the corresponding one or more target sensing modes (S603), and may transmit a SENSING HANDOVER REQUEST message to the one or more target gNBs, or may transmit a new sensing request with reconfiguration of the sensing-related configuration to the one or more target gNBs (S604). The SMF may then transmit a sensing configuration release (SENSING HANDOVER CONFIG RELEASE) message to the source gNB (S607). The source gNB may continue or stop the sensing-related behavior based on the configuration of the SMF (S608). The continuation may include an update.

Variation: After S605, the SMF may receive a confirmation/feedback message from one or more target gNBs (S606) and transmit SENSING CONFIG to the source gNB (S607).

The content of SENSING HANDOVER REQUEST may be similar to that of the Embodiment C2a. The content of SENSING HANDOVER REQUEST may include sensing configuration information for one or more target gNBs. The sensing configuration information may include, for example, at least one of the mode/method of sensing being used (for the target gNB), the sensing RS configuration, the sensing measurement/reporting configuration, the one or more sensing measurement quantities for sensing of one or more object IDs, and other configurations/information related to a sensing task for one or more object IDs (for example, the ID of the coordinated gNB or the ID of the UE to be paired).

The content of SENSING CONFIG/SENSING HANDOVER CONFIG RELEASE may include an instruction to the source gNB as to whether to continue/release/update the configuration/behavior related to sensing, or may include sensing configuration information of one or more target gNBs.

According to the embodiment, in gNB monostatic sensing, in a case in which a mobility procedure is triggered by the SMF and a target gNB is determined by the SMF, the mobility procedure can be appropriately performed.

### <Embodiment C2d>

The embodiment relates to a case (case in which the mobility procedure is triggered by the SMF and the target gNB is determined by the SMF) of a combination of Choice 1 and Choice 3 in Embodiment C1 in gNB monostatic sensing.

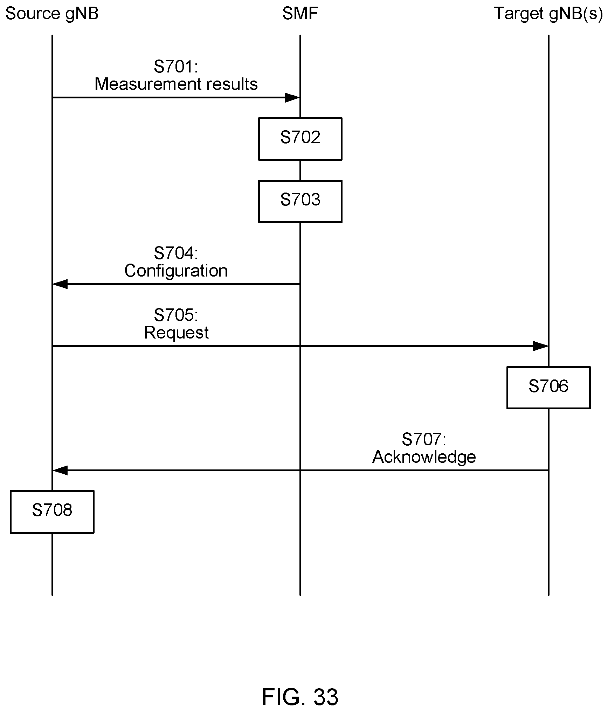

As in the example of FIG. 33, the source gNB may transmit the sensing measurement report to the SMF (S701). In a case where the condition/event in Embodiment C1 occurs in the SMF (S702), the SMF may determine at least one of the one or more target gNBs and the corresponding one or more target sensing modes (S703), and transmit a sensing handover configuration (SENSING HANDOVER CONFIG) message to the source gNB (S704). The source gNB may directly transmit SENSING HANDOVER REQUEST to one or more target gNBs (S705). Here, the source gNB may directly transfer some information from SENSING HANDOVER CONFIG by SENSING HANDOVER REQUEST. After processing the SENSING HANDOVER REQUEST information, the one or more target gNBs may take over and engage in the sensing task for the specified one or more object IDs (S706) and transmit a SENSING HANDOVER REQUEST ACKNOWLEDGE message to the source gNB (S707). The source gNB may continue or stop the transmission/measurement behavior of the sensing measurement RS based on the instruction of the SMF from SENSING HANDOVER CONFIG (S708). The continuation may include an update.

In a case where the SMF determines the target gNB, it is preferable that the SMF directly configures the target gNB (Embodiment C2c).

The content of the SENSING HANDOVER CONFIG may be similar to that of the Embodiment C2c, or may include at least one of the following several pieces of information.
◇At least one of one or more sensing object IDs, the information related to another object, the environment ID, the environment-related information, the motion ID, and the motion-related information. The motion may be a motion of an object.
◇ID associated with sensing use case.
◇One or more sensing target gNB IDs. It may include either one gNB ID for monostatic sensing, two gNB IDs for gNB-gNB bistatic sensing, or a gNB ID with/without a UE ID to be paired for gNB-UE bistatic sensing or UE-gNB bistatic sensing. The two gNB IDs may be an ID of one main gNB and an ID of one coordinated gNB.
◇One or more IDs of mode/method of sensing used in the one or more target gNBs.
◇Sensing RS configuration (in the target gNB).
◇Sensing measurement/reporting configuration (in the target gNB).
◇One or more sensing measurement quantities of one or more objects (IDs) (in the target gNB).
◇Other configurations/information related to the one or more sensing tasks for the one or more object IDs (in the target gNB).
◇Estimated sensing error related information. For example, an incomplete calibration error between the transmission antenna and the reception antenna in the target gNB.
◇Continuing/updating/stopping at least one of the sensing-related configuration for the source gNB and the updated sensing-related configuration for the source gNB. The updated sensing-related configurations may include a change in sensing resolution in a given sensing service category.
◇Sensing service category.

SENSING HANDOVER CONFIG may include the content in SENSING HANDOVER REQUEST, or may include the content in SENSING HANDOVER REQUEST ACKNOWLEDGE.

In a case where the source gNB receives a NACK/failure/fault from the SMF or fails to receive any message from the SMF for a given time, the source gNB fails to proceed with the mobility procedure to the target gNB. The failure/fault may be claimed/transferred/executed in the SMF or the source gNB. The procedure in a case where the request (SENSING HANDOVER CONFIG/SENSING HANDOVER REQUEST) fails may be performed according to at least one of the following several Options.
◇Option 1: The procedure depends on the implementation of the NW.
◇Option 2: The SMF retransmits the request to the same one or more target gNBs.
◇Option 3: The SMF re-performs the determination of the one or more target gNBs and transmits the request to the new one or more target gNBs.

According to the embodiment, in gNB monostatic sensing, in a case in which a mobility procedure is triggered by the SMF and a target gNB is determined by the SMF, the mobility procedure can be appropriately performed.

### <Analysis C2>

In gNB-UE bistatic sensing with the object/UE movement, the following several operations are conceivable.
◇In a case where the UE loses sight of the object (fails to track the object), the following several Cases are conceivable.
   - ◇Case 1: In a case where the gNB can recognize that the UE fails to track due to at least one of the periodic measurement report of the sensing RS by the UE, the position of the object, and the position of the UE, the gNB may configure another UE for sensing by periodic sensing configuration to another UE.
   - ◇Case 2: A new report on the tracking failure/fault by the UE may be introduced (Embodiment C3 described below).
◇(In a case where the gNB can distinguish the gNB failing to track from the UE failing to track) in a case where the gNB loses sight of the object (fails to track the object), the gNB may discover one or more target gNBs with or without a new sensing mode and trigger a mobility procedure for continuing a sensing function for the object (Embodiment C4 described below). Even in a case where the gNB cannot distinguish the gNB failing to track from the UE failing to track, as long as the condition in the UE in the third embodiment is established and the UE reports to the gNB or the condition in the gNB in Embodiment C4 is established, the gNB can determine whether/how to trigger the mobility procedure.
◇A relationship between an existing handover for communication and mobility for sensing may be defined (Embodiment C5 described below).

In UE-gNB bistatic sensing with the object/UE movement, the following several operations are conceivable.
◇In a case where the UE loses sight of the object (fails to track the object), the gNB can recognize the sensing state based on the measurement by the gNB. The gNB may configure another UE for sensing with periodic sensing configuration to another UE.
◇(In a case where the gNB can distinguish the gNB failing to track from the UE failing to track) in a case where the gNB loses sight of the object (fails to track the object), the gNB may discover one or more target gNBs with or without a new sensing mode and trigger a mobility procedure for continuing a sensing function for the object (Embodiment C4 described below).
◇A relationship between an existing handover for communication and mobility for sensing may be defined (Embodiment C5 described below).

### <Embodiment C3>

The embodiment relates to a procedure in a case where the UE fails to track (sensing/tracking fault/performance degradation occurs at the UE) in gNB-UE bistatic sensing.

The condition/event that triggers the reporting by the UE of at least one possibility of a sensing fault, a sensing variation, a UE change, an indication of a tracking failure of a configured object, and an indication of a reduced accuracy of a sensing task may be performed according to at least one of the following several Options 3-x.
- ◇Option 3-1: For a Type 1 measurement quantity related to a direct sensing resource measurement result, the event is established in a case where the result/value/quantity/accuracy/probability of the measurement is lower or higher than a defined/configured threshold value, or is within a defined/configured range. The Type 1 measurement quantity may be in accordance with at least one of Embodiments B1 to B4. The Type 1 measurement quantity may be measured/calculated by the UE.
- ◇Option 3-2: For a Type 2 measurement quantity associated with sensing results for a use case, the event is established in a case where the result/value/quantity/accuracy/probability of the measurement is lower or higher than a defined/configured threshold value or is within a defined/configured range. The Type 2 measurement quantity may be in accordance with at least one of Embodiments B1 to B4. The Type 2 measurement quantity may be measured/calculated by the UE.
- ◇Variation 1: The event may be that the result/value/quantity/accuracy/probability of the measurement being lower (worse) or higher (better) than a defined/configured threshold value, or being within a defined/configured range may last for a given time, or may occur a given number of times. The given time or the given number of times (threshold value) may be defined in the specification or may be configured by the RRC IE.
- ◇Variation 2: The event is established in consideration of one or more objects. The number of objects may be defined in the specification or may be configured by the RRC IE.
- ◇Variation 3: For a plurality of different measurement quantities, one common condition/event may be applied or a plurality of individual conditions/events may be applied.

After the event is triggered, the UE may transmit, to the gNB, new report for reporting the possibility of sensing fault. The report may be in accordance with at least one of the following several features.
◇The report may include at least one of the following several pieces of information.
   - ◇Sensing fault indicator.
   - ◇At least one of one or more sensing object IDs, the information related to another object, the environment ID, the environment-related information, the motion ID, and the motion-related information. The motion may be a motion of an object.
   - ◇At least one of the ID related to a sensing use case and the sensing service category.
   - ◇Sensing measurement result.
   - ◇Measurement result of L1/L3 for existing communication.
   - ◇Trigger event ID.
   - ◇The ID of the candidate target gNB and measurement result of the existing L1/L3 for communication.
   - ◇Sensing resolution being operated.
◇The content of the report may be the same as the measurement/reporting behavior of the UE for the sensing RS in at least one of Embodiments B1 to B4. Here, a new event for triggering the event triggered sensing result reporting may be introduced.
◇The report format may be RRC IE/MAC CE/UCI.

According to the embodiment, in gNB-UE bistatic sensing, the UE can properly report the tracking failure/fault.

### <Embodiment C4a>

The embodiment relates to triggering a mobility procedure by a source gNB in a case where the gNB fails to track (sensing/tracking fault/performance degradation occurs at the UE) in bistatic sensing.

The source gNB may trigger a mobility procedure based on at least one of reporting by the UE and measurement/estimation by the gNB. The triggering may be performed according to at least one of the following several Options.
◇Option 1: The source gNB reconfigures another UE within its coverage using a sensing measurement/report configuration for gNB-UE bistatic sensing.
◇Option 2: The source gNB transmits SENSING HANDOVER REQUEST to the SMF or one or more target gNBs using a procedure similar to that of Embodiment C2a/Embodiment C2b. The one or more target gNBs may be in accordance with any of Cases 1 to 6 in Embodiment C1. After receiving the feedback/instruction from the SMF, the SMF may instruct the gNB to reconfigure another UE for gNB-UE bistatic sensing, or may instruct another gNB to communicate with the same source UE.

The content of SENSING HANDOVER REQUEST may be similar to that of Embodiment C2a/Embodiment C2b. The content may be performed according to the following several features.
◇In gNB-UE bistatic sensing, the content may further include at least one of the following several pieces of information.
   - ◇ID of UE that performs sensing measurement.
   - ◇Sensing measurement reports from UE or processed measurement result from source gNBs.
   - ◇Measurement result of L1/L3 for existing communication.
   - ◇Estimated sensing error related information in this case. For example, an incomplete synchronization error between the gNB and the UE.
◇In UE-gNB bistatic sensing, the content may further include at least one of the following several pieces of information.
   - ◇ID of the UE that transmits the sensing RS.
   - ◇Sensing measurement result by the source gNB or processed measurement result.
   - ◇Estimated sensing error related information in this case. For example, an incomplete synchronization error between the gNB and the UE.

The content of SENSING HANDOVER REQUEST ACKNOWLEDGE may be similar to that of Embodiment C2a/Embodiment C2b. The procedure of failure/fault (at the time of receiving a NACK or waiting for a given time) may be similar to that in Embodiment C2a/Embodiment C2b. In a case of determining to maintain gNB-UE bistatic sensing, the content of the SENSING HANDOVER REQUEST ACKNOWLEDGE may include at least one of discovering another UE that uses the source gNB for gNB-UE bistatic sensing, handing over from the source gNB/UE to another target gNB (via existing RRCReconfiguration message in SENSING HANDOVER REQUEST ACKNOWLEDGE), and corresponding configuration signaling.

According to the embodiment, in bistatic sensing, in a case where the gNB fails to track, the source gNB can appropriately trigger the mobility procedure.

### <Embodiment C4b>

The embodiment relates to triggering a mobility procedure by the SMF in a case where the gNB fails to track in bistatic sensing.

The SMF may determine, using a procedure similar to that in Embodiment C2c/Embodiment C2d, to trigger a mobility procedure based on the report by the UE or the gNB, and determine the target gNB. The one or more target gNBs may be in accordance with any of Cases 1 to 6 in Embodiment C1. The SMF may determine a source gNB that reconfigures another UE for gNB-UE bistatic sensing, or may determine to cause the source gNB to hand over from the source gNB/UE to the target gNB (in a case where it has determined to maintain gNB-UE bistatic sensing).

The content of SENSING HANDOVER REQUEST may be similar to that of Embodiment C2c. The content of the SENSING HANDOVER CONFIG may be similar to that of the Embodiment C2d. The procedure of failure/fault (at the time of receiving a NACK or waiting for a given time) may be similar to that in Embodiment C2d. The content of SENSING HANDOVER REQUEST/SENSING HANDOVER CONFIG may further include additional information of the ID of the sensing UE involved.

According to the embodiment, in bistatic sensing, in a case where the gNB fails to track, the SMF can appropriately trigger a mobility procedure.

### <Embodiment C5>

The embodiment relates to a relationship between an existing handover for communication and mobility for sensing.

In a case where one UE is configured with both communication and sensing (one UE has received a configuration of both communication and sensing), the UE may be separately configured with a measurement report for communication and a measurement report for sensing.

The mobility procedure/signaling for communication and sensing may be performed according to at least one of the following several Choices.
◇Choice 1: Separate/individual procedures/signaling. In this case, for communication and sensing, separate handover signaling/procedures may be introduced based on corresponding measurement reports.
◇Choice 2: Common procedure/signaling. In this case, the gNB/UE may perform a common handover based on a joint study of a measurement report for communication and sensing. The gNB/UE may perform a common handover for communication and sensing based on a measurement report for at least one of communication and sensing.

Whether the gNB triggers a mobility procedure of sensing may be performed according to at least one of the following several Options.
◇Option 1: Whether the gNB triggers a mobility procedure of sensing is based on a joint study of a measurement report (condition/event) for communication and sensing.
◇Option 2: Whether the gNB triggers a mobility procedure of sensing is based on a measurement report (condition/event) for sensing.
◇Option 3: In a case where an existing communication mobility procedure is triggered by the UE, the sensing mobility procedure is also triggered/executed by the UE.

According to the embodiment, a relationship between an existing handover for communication and mobility for sensing can be determined.

### <Analysis C3>

In gNB-gNB bistatic sensing with the object/UE movement, the gNB may lose sight of the object/UE (object tracking fails). Before that, the gNB may trigger a mobility procedure. The triggering may be performed according to at least one of the following several Cases.
◇Case 1: A coordinated gNB is changed (Embodiment C6 described later). This may mean that the source gNB and the gNB-gNB bistatic sensing mode are maintained.
◇Case 2: The source gNB or at least one of the source gNB, the coordinated gNB, and the sensing mode is changed (Embodiment C7 described later). This may not mean that the target gNB is in the gNB-gNB bistatic sensing mode.

### <Embodiment C6>

The embodiment relates to a mobility procedure of gNB-gNB bistatic sensing.

The triggering of the mobility procedure may be determined by at least one of the following several Choices.
◇Choice 1: SMF.
◇Choice 2: Source gNB. The determination may depend on implementation or may be based on the condition/event of Embodiment C1.
◇Choice 3: Coordinated gNB. The determination may depend on implementation or may be based on the condition/event of Embodiment C1.

The target gNB and the target sensing method/mode for mobility may be determined by at least one of the following several Choices.
◇Choice 4: SMF.
◇Choice 5: Source gNB.
◇Choice 6: Coordinated gNB.
◇In the determination of the sensing method/mode, the SMF is more preferred.
◇In a case where the SMF determines triggering of a mobility procedure, the SMF preferably also determines the target gNB.
◇The one or more target gNBs may be in accordance with any of Cases 1 to 6 of Embodiment C1.

In Choice 1 case, the SMF may determine one or more new target coordinated gNBs. The SMF may transmit an instruction/configuration of (the IDs of) the one or more new target gNBs for cooperation with the one or more gNBs to the source gNB. The instruction/configuration may be similar to SENSING HANDOVER CONFIG in Embodiment C2d. The mobility procedure may be performed according to at least one of the following several Options 1-x.
◇Option 1-1: The source gNB may transmit SENSING HANDOVER REQUEST to one or more new target gNBs or may transmit a reconfiguration of sensing-related configurations to one or more new target gNBs, in order to construct a sensing pair for the new gNB. The signaling/procedure may be similar to that of Embodiment C2d. Before that, the source gNB may transmit a configuration/instruction for releasing the sensing configuration to the original coordinated gNB.
◇Option 1-2: The SMF may transmit SENSING HANDOVER REQUEST to one or more new target gNBs together with the ID of the source gNB and the sensing-related configuration from the source gNB, or may transmit a reconfiguration of the sensing-related configuration to one or more new target gNBs. The signaling/procedure may be similar to that of Embodiment C2c.

In Choice 2/3 case, a procedure similar to that of Embodiment C2a/Embodiment C2b may be diverted/reused. The content of SENSING HANDOVER REQUEST may further include an estimated sensing error (for example, an error of incomplete synchronization between the source gNB and the coordinated gNB) in this case.

According to the embodiment, a gNB-gNB bistatic sensing mobility procedure can be appropriately executed.

### <Embodiment C7>

The embodiment relates to another form of the gNB-gNB bistatic sensing mobility procedure.

The triggering of the mobility procedure may be determined by at least one of Choices 1 to 3 in Embodiment C6.

The target gNB and the target sensing method/mode for mobility may be determined by at least one of Choices 4 to 6 in Embodiment C6.

In Choice 1 case, the SMF may determine one or more new target coordinated gNBs and a sensing mode for the corresponding object. The SMF may transmit an instruction/configuration of (the IDs of) one or more new target gNBs to the source gNB. The instruction/configuration may be similar to SENSING HANDOVER CONFIG in Embodiment C2d. The mobility procedure may be performed according to at least one of the following several Options 1-x.
◇Option 1-1: The source gNB may transmit SENSING HANDOVER REQUEST to one or more new target gNBs. The source gNB may continue/stop/update the sensing-related behavior after receiving SENSING HANDOVER REQUEST ACKNOWLEDGE from one or more new target gNBs.
◇Option 1-2: The SMF may transmit SENSING HANDOVER REQUEST to one or more new target gNBs. The source gNB may continue/stop/update the sensing-related behavior.
◇The one or more target gNBs may be in accordance with any of Cases 1 to 6 of Embodiment C1. That is, the one or more new target gNBs may be only the new target gNB (the sensing mode may be determined to be gNB monostatic sensing), may be a plurality of new target gNBs (both the new main gNB and the new coordinated gNB) (the sensing mode may be maintained in gNB-gNB bistatic sensing), or may be the new target gNB and the UE to be paired (sensing mode may be determined to be bistatic sensing of the gNB-UE or the UE-gNB).
◇In the foregoing Option 1-x, SENSING HANDOVER REQUEST or SENSING HANDOVER CONFIG may include an instruction/configuration of only the new target gNB, may include an instruction/configuration of a plurality of new target gNBs (both the new main gNB and the new coordinated gNB), or may include an instruction/configuration of the new target gNB and the UE to be paired.

In Choice 2/3 case, a procedure similar to that of Embodiment C2a/Embodiment C2b may be diverted/reused. The one or more target gNBs may be in accordance with any of Cases 1 to 6 in Embodiment C1. That is, the one or more new target gNBs may be only the new target gNB (the sensing mode may be determined to be gNB monostatic sensing), may be a plurality of new target gNBs (both the new main gNB and the new coordinated gNB) (the sensing mode may be maintained in gNB-gNB bistatic sensing), or may be the new target gNB and the UE to be paired (sensing mode may be determined to be bistatic sensing of the gNB-UE or the UE-gNB). The content of SENSING HANDOVER REQUEST may further include an estimated sensing error (for example, an error of incomplete synchronization between the source gNB and the coordinated gNB) in this case.

According to the embodiment, a gNB-gNB bistatic sensing mobility procedure can be appropriately executed.

### <Embodiment C8>

The embodiment relates to a constraint of changing a sensing mode in a mobility procedure.

The source gNB or the target gNB determined by the SMF in a case of being changed to a sensing mode different from the sensing mode of the source gNB (target sensing mode, target mode, and second mode) may be at least one of the following several Options.
◇Option 1: One or more gNBs (supporting/configured/using) with the same sensing mode as that of the source gNB.
◇Option 2: one or more gNBs (supporting/configured/using) with a sensing mode that is the same as or different from the sensing mode of the source gNB.

In the sensing mode in the mobility procedure, there may be a rule for the sensing mode of the source gNB and the sensing mode of one or more target gNBs. The rule may be defined in a specification, may be configured/specified, or reported as capability information. The rule may be performed according to at least one of the following example Options.
◇Example 1: In a case where the sensing mode of the source gNB is gNB monostatic sensing, the sensing mode of the one or more target gNBs is either gNB monostatic sensing or gNB-gNB bistatic sensing.
◇Example 2: In a case where the sensing mode of the source gNB is gNB-UE bistatic sensing, the sensing mode of the one or more target gNBs is either gNB-UE bistatic sensing or UE-gNB bistatic sensing.
◇Example 3: In a case where the sensing mode of the source gNB is gNB monostatic sensing, the sensing mode of the one or more target gNBs is any one of gNB monostatic sensing, gNB-gNB bistatic sensing, gNB-UE bistatic sensing, and UE-gNB bistatic sensing.
◇Example 4: In a case where the sensing mode of the source gNB is gNB-UE bistatic sensing, the sensing mode of the one or more target gNBs is any one of gNB-gNB bistatic sensing, gNB-UE bistatic sensing, UE-gNB bistatic sensing, and gNB-gNB bistatic sensing.
◇Example 5: The sensing mode of the one or more target gNBs depends on the capabilities of the target gNB. The capability may be to support gNB monostatic sensing/full-duplex communication.

According to the embodiment, an appropriate sensing mode can be applied in the mobility procedure.

### <NW node (network node)>

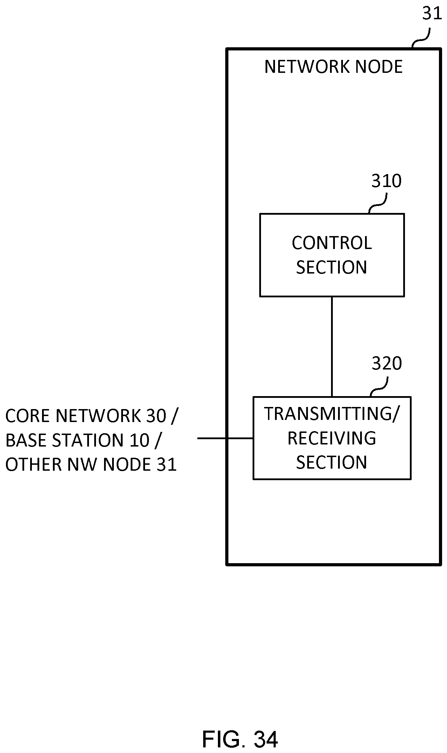

As in the example of FIG. 34, an NW node 31 may include a control section 310 and a transmitting/receiving section 320. The control section 310 performs a procedure/operation in each embodiment and controls the transmitting/receiving section 320. The transmitting/receiving section 320 has a transmission line interface for at least one of a core network 30, a base station 10, and another NW node 31. The hardware configuration of the NW node 31 may be similar to the hardware configurations of the base station 10 and the user terminal 20 described later. The NW node 31 may include an extended LMF/new SMF/new AMF/SMF/SF/base station 10 (gNB).

In a case where information (for example, a measurement result and a processing result) based on measurement of a signal for sensing (for example, sensing RS) satisfies a condition (for example, a condition/event), the control section 310 may control at least one change (for example, a mobility procedure) of the base station 10 for sensing, the terminal 20 for the sensing, and the mode of the sensing (for example, sensing mode/method). The transmitting/receiving section 320 may perform at least one of transmission and reception of the message (for example, at least one of SENSING HANDOVER REQUEST, SENSING HANDOVER REQUEST ACKNOWLEDGE, SENSING HANDOVER CONFIG, and SENSING HANDOVER CONFIG RELEASE) for the change.

The base station 10 may transmit and receive the signal (for example, gNB monostatic sensing). The change may include changing the base station to one or more other target base stations.

A transmitter (for example, gNB/UE, main gNB/UE) may transmit the signal and a receiver (for example, other gNBs/UEs, coordinated gNBs/UEs) may receive the signal (for example, bistatic sensing). The change may include changing at least one source base station (for example, the source gNB)10 of the transmitter and the receiver to one or more other target base stations (for example, the target gNB)10.

In a case where the base station (for example, the source gNB)10 is changed to the target base station (for example, the target gNB)10, the change may include changing the mode to the second mode based on a constraint between the mode (for example, the sensing mode before the change) and a second mode (for example, the sensing mode after the change) of the sensing at the target base station.

### <Supplement>

### [Notification of Information to UE]

Notification of any information (from the network (NW)) (for example, the base station (BS)) to the UE (in other words, reception of any information from the BS by the UE) in the above-described embodiments may be performed using physical layer signaling (for example, DCI), higher layer signaling (for example, RRC signaling, a MAC CE), a given signal/channel (for example, a PDCCH, a PDSCH, or a reference signal), or a combination thereof.

In a case where the notification is performed by a MAC CE, the MAC CE may be identified by including, in a MAC subheader, a new logical channel ID (LCID) not defined in existing standards.

In a case where the notification is performed using DCI, the notification may be performed by a given field of the DCI, a radio network temporary identifier (RNTI) used for scrambling of cyclic redundancy check (CRC) bits added to the DCI, a format of the DCI, or the like.

In addition, the notification of any information to the UE in the above-described embodiments may be performed periodically, semi-persistently, or aperiodically.

### [Notification of Information from UE]

Notification of any information from the UE (to the NW) (in other words, transmission/report of any information to the BS by the UE) in the above-described embodiments may be performed using physical layer signaling (for example, UCI), higher layer signaling (for example, RRC signaling, a MAC CE), a given signal/channel (for example, a PUCCH, a PUSCH, a PRACH, or a reference signal), or a combination thereof.

In a case where the notification is performed by a MAC CE, the MAC CE may be identified by including, in a MAC subheader, an LCID not defined in existing standards.

In a case where the notification is performed by a UCI, the notification may be transmitted using a PUCCH or PUSCH.

In addition, the notification of any information from the UE in the above-described embodiments may be performed periodically, semi-persistently, or aperiodically.

### [About application of each embodiment]

At least one of the above-described embodiments may be applied in a case where a given condition is satisfied. The given condition may be specified in a standard, or may be notified to the UE/BS using higher layer signaling/physical layer signaling (RRC IE/MAC CE/UCI).

The given condition may indicate at least one of the following:
◇Configuration of the enabling of at least one of the foregoing embodiments.

At least one of the above-described embodiments may be applied only to a UE that has reported a given UE capability or supports the given UE capability.

The given UE capability may indicate at least one of the following:
◇The UE supports a given procedure/process/operation/control/information for at least one of the above embodiments.
◇Use case supported by the UE.
◇Sensing mode/method supported by the UE.
◇At least one of the sensing measurement quantity supported by the UE and the accuracy corresponding thereto.
◇Sensing measurement report configuration supported by the UE.
◇The number (maximum number) of sensing objects supported by the UE per use case.
◇At least one of the condition/event for a mobility procedure supported by the UE and the report triggered by the condition/event.
◇At least one of the sensing RS supported by the UE and the sensing RS configuration supported by the BS.
◇Sensing RS measurement capability supported by the UE.
◇Sensing error improvement method supported by the UE.
◇At least one of the UE supporting a mobility procedure for sensing, and the mobility procedure supported by the BS.

The UE capability may be read as a BS capability. The UE capability may be reported to the server/LMF/SF/BS/another UE. The BS capability may be reported to the server/LMF/SF/UE/another BS.

The given BS capability may indicate at least one of the following:
◇The BS supports a given procedure/process/operation/control/information for at least one of the above embodiments.
OUse case supported by the BS.
◇Sensing mode/method supported by the BS.
OAt least one of the sensing measurement quantity supported by the BS and the accuracy corresponding thereto.
◇Sensing measurement report configuration supported by the BS.
OThe number (maximum number) of sensing objects per use case supported by the BS.
OAt least one of the condition/event for a mobility procedure supported by the BS and the report triggered by the condition/event.
OAt least one of the sensing RS supported by the BS and the sensing RS configuration supported by the BS.
◇Sensing RS measurement capability supported by the BS.
◇Sensing error improvement method supported by the BS.
◇ The BS supports identifying one or more target BSs for a mobility procedure.
OAt least one of the BS supporting a mobility procedure for sensing and the mobility procedure supported by the BS.

In addition, the given UE capability may be capability applied over all the frequencies (in common irrespective of frequency), may be capability for each frequency (for example, one of a cell, a band, a band combination, a BWP, a component carrier, and the like or a combination thereof), may be capability for each frequency range (for example, Frequency Range 1 (FR1), FR2, FR3, FR4, FR5, FR2-1, and FR2-2), may be capability for each subcarrier spacing (SCS), or may be capability for each feature set (FS) or feature set per component-carrier (FSPC).

In addition, the given UE capability may be capability applied across all the duplex schemes (in common irrespective of duplex scheme) or may be capability for each duplex scheme (for example, time division duplex (TDD) and frequency division duplex (FDD)).

In addition, at least one of the above-described embodiments may be applied in a case where the UE is configured/activated/triggered with given information related to the above-described embodiment (or to perform the operation of the above-described embodiment) by higher layer signaling/physical layer signaling. The given information may indicate at least one of the following:
◇ information indicating activation/deactivation of the operation of the above-described embodiments.
◇RRC parameters for a given release or given RAT. In Rel. YY (for example, YY is 18 or more), the RRC parameter that enables the operation XXX may be expressed as XXX_rYY (XXX-rYY).

In a case where the UE does not support at least one of the above given UE capabilities or is not configured with the above given information, for example, the operation of Rel. 15/16 may be applied.

### (Supplementary Notes)

Regarding one embodiment of the present disclosure, the following Supplementary notes of the invention will be given.

### [Supplementary note 1]

A network node including
a control section that controls, in a case where information based on measurement of a signal for sensing satisfies a condition, a change of at least one of a base station for the sensing, a terminal for the sensing, and a mode of the sensing, and
a transmitting/receiving section that performs at least one of transmission and reception of a message for the change.

### [Supplementary note 2]

The network node according to Supplementary note 1, wherein
the base station transmits and receives the signal, and
the change includes changing the base station to one or more other target base stations.

### [Supplementary note 3]

The network node according to Supplementary note 1 or 2, wherein
a transmitter transmits the signal, and a receiver receives the signal, and
the change includes changing at least one source base station of the transmitter and the receiver to one or more other target base stations.

### [Supplementary note 4]

The network node according to any one of Supplementary notes 1 to 3, wherein in a case where the base station is changed to a target base station, the change includes changing the mode to the second mode based on a constraint between the mode and a second mode of the sensing at the target base station.

### (Supplementary Notes)

Regarding one embodiment of the present disclosure, the following Supplementary notes of the invention will be given.

### [Supplementary note 1]

A terminal including
a receiving section that receives a signal for sensing, and
a control section that controls transmission of a report of a fault in the sensing in a case where information based on measurement of the signal satisfies a condition.

### [Supplementary note 2]

The terminal according to Supplementary note 1, wherein the condition is deterioration in object tracking performance in the sensing.

### [Supplementary note 3]

The terminal according to Supplementary note 1 or 2, wherein after the report, the control section changes one or more base stations that transmit a signal for the sensing.

### [Supplementary note 4]

The terminal according to any one of Supplementary notes 1 to 3, wherein the report includes at least one of the fault, the object, an environment of the sensing, a movement of the object, a use case of the sensing, a category of the sensing, a result of the measurement, a measurement result of a communication signal, the condition, a candidate of a base station that transmits a signal for the sensing, and a resolution of the sensing.

### (Supplementary Notes)

Regarding one embodiment of the present disclosure, the following Supplementary notes of the invention will be given.

### [Supplementary note 1]

A terminal including
a receiving section that receives configurations of communication and sensing, and
a control section that controls transmission of a first report of measurement for the communication and transmission of a second report of measurement for the sensing.

### [Supplementary note 2]

The terminal according to Supplementary note 1, wherein after at least one of the first report and the second report, the control section changes one or more base stations related to at least one of the communication and the sensing.

### [Supplementary note 3]

The terminal according to Supplementary note 1 or 2, wherein the control section performs a procedure of changing one or more base stations related to the sensing, separately from a procedure of changing one or more base stations related to the communication.

### [Supplementary note 4]

The terminal according to any one of Supplementary notes 1 to 3, wherein the control section performs a procedure of changing one or more base stations related to the communication and the sensing.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

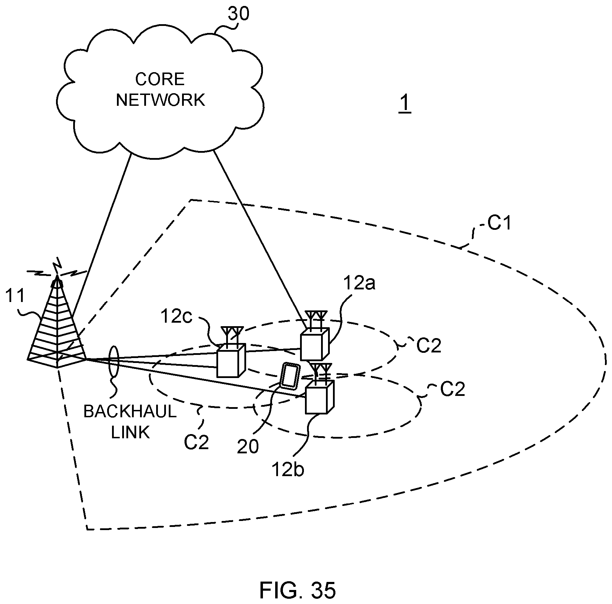

FIG. 35 is a diagram illustrating an example of a schematic configuration of a radio communication system according to one embodiment. A radio communication system 1 (simply referred to as the system 1) may be a system that implements communication using Long Term Evolution (LTE), a 5th generation mobile communication system, a New Radio (5G NR), and the like specified by a Third Generation Partnership Project (3GPP).

Further, the radio communication system 1 may support dual connectivity (multi-RAT dual connectivity (MR-DC)) between a plurality of radio access technologies (RATs). The MR-DC may include dual connectivity between the LTE (evolved universal terrestrial radio access (E-UTRA)) and the NR (E-UTRA-NR dual connectivity (EN-DC)), dual connectivity between the NR and the LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both the MN and the SN are NR base stations (gNB) (NR-NR dual connectivity (NN-DC))).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as the "base station 10" in a case where the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency band (frequency range 1 (FR1)) or a second frequency band (frequency range 2 (FR2)). The macro cell C1 may be included in the FR1, and the small cell C2 may be included in the FR2. For example, the FR1 may be a frequency band of 6 GHz or less (sub-6 GHz), and the FR2 may be a frequency band higher than 24 GHz (above-24 GHz). It is noted that the frequency bands, definitions, and the like of the FR1 and FR2 are not limited thereto, and, for example, the FR1 may correspond to a frequency band higher than the FR2.

Further, the user terminal 20 may perform communication on each CC using at least one of time division duplex (TDD) and frequency division duplex (FDD).

The plurality of base stations 10 may be connected to each other in a wired manner (for example, an optical fiber in compliance with common public radio interface (CPRI), an X2 interface, or the like) or in a radio manner (for example, NR communication). For example, in a case where NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of an Evolved Packet Core (EPC), a 5G Core Network (5GCN), a Next Generation Core (NGC), or the like.

The core network 30 may include, for example, network functions (NFs) such as a user plane function (UPF), an access and mobility management function (AMF), a session management function (SMF), a unified data management (UDM), an application function (AF), a data network (DN), a location management function (LMF), or an operation, administration and maintenance (management) (OAM). Note that a plurality of functions may be provided by one network node. In addition, communication with an external network (for example, the Internet) may be performed via the DN.

The user terminal 20 may be a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. It is noted that in the radio communication system 1, another radio access method (for example, another single carrier transmission method or another multi-carrier transmission method) may be used as the UL and DL radio access method.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. The user data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH and the PUSCH.

It is noted that the DCI that schedules the PDSCH may be referred to as DL assignment, DL DCI, or the like, and the DCI that schedules PUSCH may be referred to as UL grant, UL DCI, or the like. It is noted that the PDSCH may be interchangeable with DL data, and the PUSCH may be interchangeable with UL data.

For detection of the PDCCH, a control resource set (CORESET) and a search space may be used. The CORESET corresponds to a resource for searching for DCI. The search space corresponds to a search area and a search method of PDCCH candidates. One CORESET may be associated with one or more search spaces. The UE may monitor a CORESET associated with a given Search Space based on a Search Space configuration.

One search space may correspond to a PDCCH candidate corresponding to one or more aggregation levels. One or more search spaces may be referred to as a search space set. It is noted that "search space", "search space set", "search space configuration", "search space set configuration", "CORESET", "CORESET configuration", and the like in the present disclosure may be read interchangeably with each other.

Uplink control information (UCI) including at least one of channel state information (CSI), delivery acknowledgement information (for example, may be referred to as hybrid automatic repeat request acknowledgement (HARQ-ACK), ACK/NACK, or the like), and scheduling request (SR) may be transmitted on the PUCCH. A random access preamble for establishing a connection with a cell may be transmitted on the PRACH.

It is noted that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) and a secondary synchronization signal (SSS). A signal block including the SS (PSS, SSS) and the PBCH (and the DMRS for the PBCH) may be referred to as an SS/PBCH block, an SS block (SSB), or the like. It is noted that the SS, the SSB, or the like may be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). It is noted that DMRSs may be referred to as "user terminal-specific reference signals (UE-specific Reference Signals)".

The core network 20 (a server in the core network 20) may transmit a request related to sensing or assistance data. The base station 10 may control at least one of reporting the sensing result, activation or deactivation of transmission of a reference signal for the sensing, configuration or update of the reference signal, activation or deactivation of measurement of the sensing, and update of the sensing method based on the request. The user terminal 20 may transfer either the sensing capabilities or the sensing results based on the request or the assistance data.

### (Base Station)

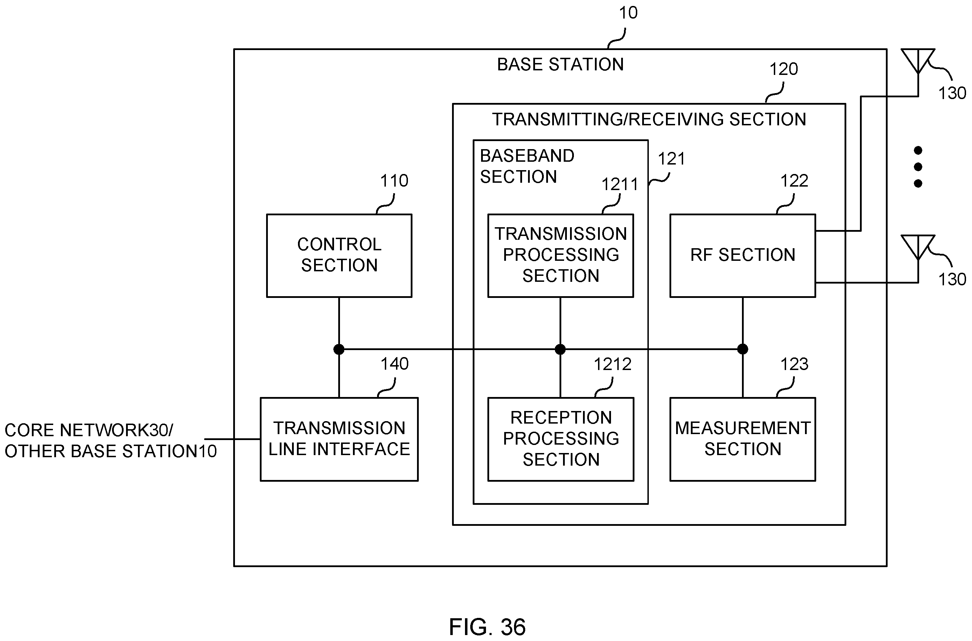

FIG. 36 is a diagram illustrating an example of a configuration of the base station according to one embodiment. The base station 10 includes a control section 110, a transmitting/receiving section 120, a transmission/reception antenna 130, and a transmission line interface 140. It is noted that one or more of the control sections 110, one or more of the transmitting/receiving sections 120, one or more of the transmission/reception antennas 130, and one or more of the transmission line interfaces 140 may be included.

It is noted that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can include a controller, a control circuit, or the like, which is described based on common recognition in a technical field according to the present disclosure.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may transfer the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a base band circuit, a filter, a phase shifter, a measurement circuit, a transmission/reception circuit, or the like, which is described based on common recognition in a technical field according to the present disclosure.

The transmitting/receiving section 120 may be constituted as an integrated transmitting/receiving section, or may be constituted by a transmitting section and a receiving section. The transmitting section may include the transmission processing section 1211 and the RF section 122. The receiving section may include the reception processing section 1212, the RF section 122, and the measurement section 123.

The transmission/reception antenna 130 can include an antenna, for example, an array antenna, or the like, which is described based on common recognition in a technical field according to the present disclosure.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a Tx beam or a reception beam using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmission/reception antenna 130.

Meanwhile, the transmitting/receiving section 120 (RF section 122) may perform amplification, filtering processing, demodulation to a baseband signal, and the like on the signal in the radio frequency band received by the transmission/reception antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer process on the acquired baseband signal, to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. A measurement result may be output to the control section 110.

The transmission line interface 140 may transmit/receive a signal (backhaul signaling) to and from an apparatus (for example, a network node providing the NF) included in the core network 30, another base station 10, and the like, and may acquire, transmit, and the like user data (user plane data), control plane data, and the like for the user terminal 20.

It is noted that, the transmitting section and the receiving section of the base station 10 in the present disclosure may include at least one of the transmitting/receiving section 120, the transmission/reception antenna 130, and the transmission line interface 140.

The transmitting/receiving section 120 may perform at least one of transmission and reception of a signal for sensing (for example, sensing RS). In a case where information (for example, a measurement result and a processing result) based on the measurement of the signal satisfy a condition (for example, condition/event), the control section 110 may control at least one change (for example, a mobility procedure) of the base station for sensing, the terminal for sensing, and the sensing mode (for example, sensing mode/method).

The transmitting/receiving section 120 may transmit a signal for sensing (for example, sensing RS). The control section 110 may control reception of the sensing fault report in a case where (for example, a measurement result and a processing result) based on the measurement of the signal satisfy a condition (for example, condition/event).

The transmitting/receiving section 120 may transmit configurations of communication and sensing. The control section 110 may control reception of a first report of measurement for the communication and reception of a second report of measurement for the sensing.

### (User terminal)

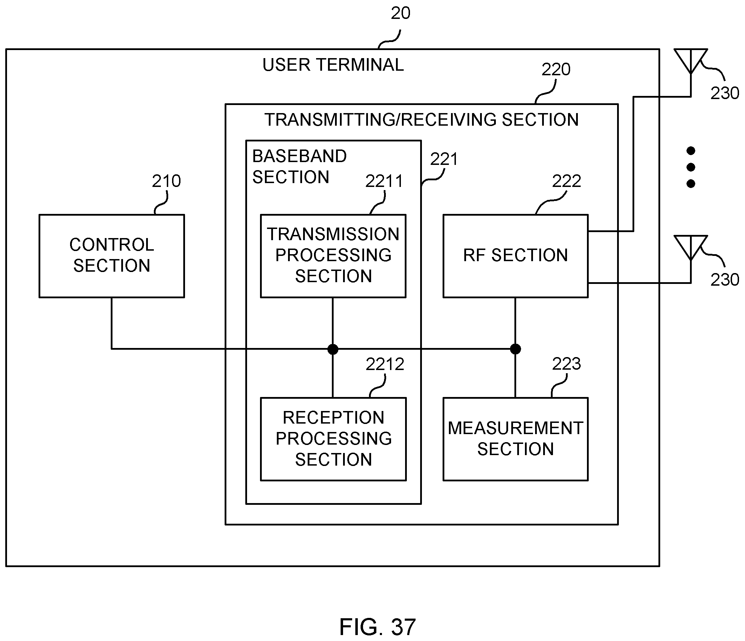

FIG. 37 illustrates an example of a configuration of the user terminal according to one embodiment. The user terminal 20 includes a control section 210, a transmitting/receiving section 220, and a transmission/reception antenna 230. It is noted that one or more of the control sections 210, one or more of the transmitting/receiving sections 220, and one or more of the transmission/reception antennas 230 may be included.

It is noted that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described based on common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described based on common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmission/reception antenna 230 can include an antenna that is described based on common recognition in the technical field related to the present disclosure, for example, an array antenna or the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam and a reception beam using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

It is noted that whether to apply DFT processing may be determined based on configuration of transform precoding. In a case where the transform precoding is enabled for a channel (for example, PUSCH), the transmitting/receiving section 220 (transmission processing section 2211) may perform DFT processing as the transmission processing to transmit the channel using a DFT-s-OFDM waveform, and otherwise, DFT processing does not have to be performed as the transmission processing.

The transmitting/receiving section 220 (RF section 222) may perform modulation to a radio frequency band, filtering processing, amplification, and the like on the baseband signal, to transmit a signal in the radio frequency band via the transmission/reception antenna 230.

Meanwhile, the transmitting/receiving section 220 (RF section 222) may perform amplification, filtering processing, demodulation to a baseband signal, and the like on the signal in the radio frequency band received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. A measurement result may be output to the control section 210.

Note that the measurement section 223 may derive channel measurement for CSI computation, based on a channel measurement resource. The channel measurement resource may be, for example, a non-zero power (NZP) CSI-RS resource. In addition, the measurement section 223 may derive interference measurement for CSI computation, based on an interference measurement resource. The interference measurement resource may be at least one of an NZP CSI-RS resource for interference measurement, a CSI-interference measurement (IM) resource, or the like. Note that the CSI-IM may be referred to as CSI-interference management (IM), and may be read interchangeably with a zero power (ZP) CSI-RS. Note that, in the present disclosure, CSI-RS, NZP CSI-RS, ZP CSI-RS, CSI-IM, CSI-SSB, and the like may be read interchangeably with each other.

It is noted that the transmitting section and the receiving section of the user terminal 20 in the present disclosure may include at least one of the transmitting/receiving section 220 and the transmission/reception antenna 230.

The transmitting/receiving section 220 may receive a signal for sensing (for example, sensing RS). In a case where information (for example, a measurement result and a processing result) based on the measurement of the signal satisfy a condition (for example, condition/event), the control section 210 may control transmission of the report of the sensing fault (Embodiment C3).

The condition may be deterioration in object tracking performance in the sensing.

After the report, the control section 210 may change one or more base stations that transmit the signal for the sensing.

The report may include at least one of the obstacle, the object, an environment of the sensing, a movement of the object, a use case of the sensing, a category of the sensing, a result of the measurement, a measurement result of a communication signal, the condition, a candidate of a base station that transmits a signal for the sensing, and a resolution of the sensing.

The transmitting/receiving section 220 may receive configurations of communication and sensing. The control section 210 may control transmission of a first report of measurement for the communication and transmission of a second report of measurement for the sensing (Embodiment C5).

After at least one of the first report and the second report, the control section 210 may change one or more base stations related to at least one of the communication and the sensing.

The control section 210 may perform a procedure of changing one or more base stations related to the sensing, separately from a procedure of changing one or more base stations related to the communication.

The control section 210 may perform a procedure of changing one or more base stations related to the communication and the sensing.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

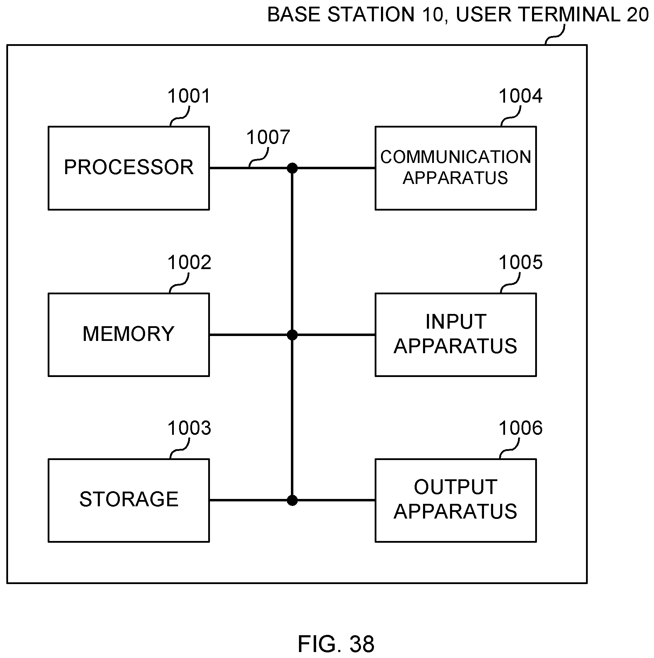

For example, a base station, a user terminal, and so on according to one embodiment of the present disclosure may function as a computer that executes the processes of the radio communication method of the present disclosure. FIG. 38 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

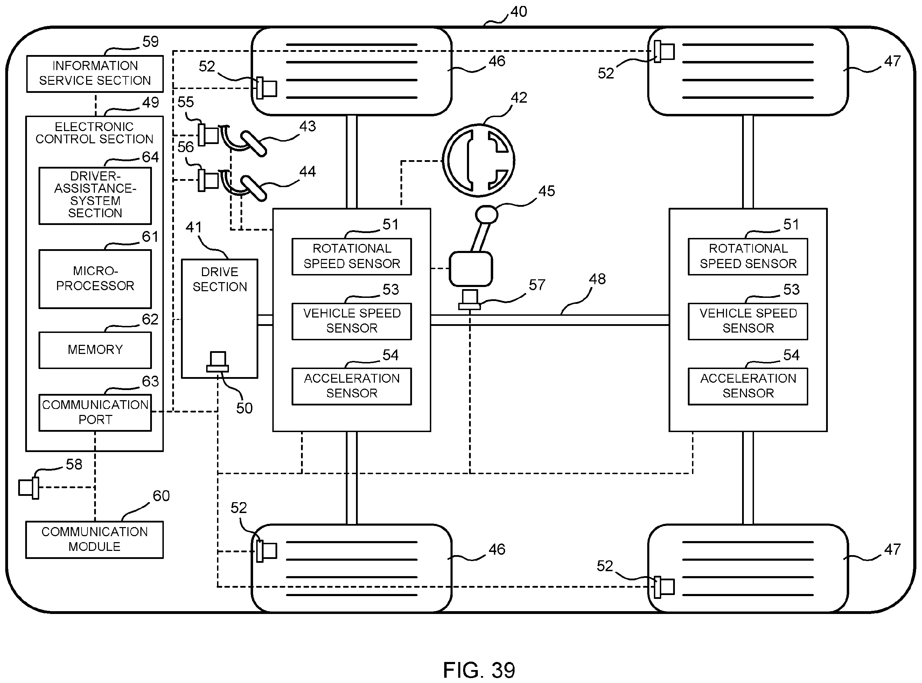

FIG. 39 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s)..." ("..." may be expressed using, for example, a that-clause, a to-infinitive, or the like) may be used interchangeably with "be expected...". "Does not expect..." may be used interchangeably with "be not expected...". Furthermore, "an apparatus A is not expected..." may be used interchangeably with "an apparatus B other than the apparatus A does not expect... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives a signal for sensing; and
a control section that controls transmission of a report of a fault of the sensing in a case where information based on measurement of the signal satisfies a condition.

2. The terminal according to claim 1, wherein the condition is deterioration in object tracking performance in the sensing.

3. The terminal according to claim 1, wherein after the report, the control section changes one or more base stations that transmit a signal for the sensing.

4. The terminal according to claim 1, wherein the report includes at least one of the fault, the object, an environment of the sensing, a movement of the object, a use case of the sensing, a category of the sensing, a result of the measurement, a measurement result of a communication signal, the condition, a candidate of a base station that transmits a signal for the sensing, and a resolution of the sensing.

5. A radio communication method of a terminal, the method comprising the steps of:
receiving a signal for sensing; and
controlling transmission of a report of a fault of the sensing in a case where information based on measurement of the signal satisfies a condition.

6. A base station comprising:
a transmitting section that transmits a signal for sensing; and
a control section that controls reception of a report of a fault of the sensing in a case where information based on measurement of the signal satisfies a condition.
